# EUROPEAN PATENT APPLICATION

(11) **EP 1 246 447 A2**
(43) Date of publication of application: **02.10.2002**
(21) Application number: 02006825.0
(22) Date of filing: 25.03.2002
(51) Int. Cl.: H04N 1/00, H04N 5/00, H04N 5/225, H04N 5/232

(54) **Image processing system**

(30) Priority: 26.03.2001 JP 2001088491
(71) Applicant: KONICA CORPORATION, Tokyo (JP)
(72) Inventor: Hanabusa, Shinichi, c/o Konica Corporation, Hino-shi, Tokyo 191-8511 (JP); Takemoto, Kazuhiro, c/o Konica Corporation, Hino-shi, Tokyo 191-8511 (JP); Iguchi, Takeyoshi, c/o Konica Corporation, Shinjuku-ku 163-0512 - Tokyo (JP); Aizawa, Iwao, c/o Konica Corporation, Hino-shi, Tokyo 191-8511 (JP); Kobayashi, Ryuichiro, c/o Konica Corporation, Hino-shi, Tokyo 191-8511 (JP); Koboshi, Shigeharu, c/o Konica Corporation, Hino-shi, Tokyo 191-8511 (JP)
(74) Representative: Henkel, Feiler, Hänzel

(57) **Abstract**

An image processing system, having an image pickup trigger device transmitting a image pickup trigger signal, an image pickup device for obtaining image data by imaging a photographic object in response to the trigger signal, a first network for transmitting said image data, a selection device for selecting a set of image data to be processed from the image data, a processing information generating section for generating processing information of the set of image data selected, a second network for transmitting the processing information, and an image data processing section connected to both the first network and the second network for processing the image data.

## Description

### BACKGROUND OF THE INVENTION

This invention relates to an image processing system, a print order receiving apparatus, an image pickup apparatus, and a trigger device for image pickup, and in particular, to an image processing system, a print order receiving apparatus, an image pickup apparatus, and a trigger device for image pickup, which enables image pickup and acquisition of a print in a theme park or the like which are satisfactory for the users and is economical for both of the users and the provider of the system.

Up to now, in an image pickup system which is installed in a theme park or in a picturesque place, there have been problems that image pickup could be done only at a definite place and at a definite timing, that the content of image pickup was rough to make it impossible for a user to obtain a satisfactory image, etc.

Therefore, it is proposed an image pickup system which issues an image pickup order to an image pickup apparatus fixed at a specified position by means of a remote controller, stores image data for each of ID numbers transmitted by the remote controller, and makes prints (refer to the publication of the unexamined patent application H11-215421).

However, in the above-mentioned image pickup system, because only it is done to make prints of image data stored, to provide them to a user, there is still left a problem that there is no room for a user to select an image, and he must buy a print that is unnecessary for him, which gives dissatisfaction to him. Further, if the user does not buy the print, the cost for it becomes fruitless; this is an uneconomical system.

Therefore, it is an object of this invention to provide an image processing system, which enables image pickup and acquisition of a print which are satisfactory for users in a theme park or the like and is economical for both of the users and the provider of the system, by using two network systems when inputted image data in an image pickup system are transmitted to a print outputting system, and employing a control system for obtaining and storing image data which are satisfactory for a user in one network system and a control system for carrying out the selection of a set of image data and producing a print requested by the user in the other network system.

Other objects of this invention will be made clear by the following description.

### SUMMARY OF THE INVENTION

The structure (1) to solve the above-mentioned problems is an image processing system, characterized by comprising a trigger device for image pickup capable of transmitting a trigger signal for image pickup, an image pickup means for obtaining image data by imaging a photographic object in response to said trigger signal for image pickup, a first network means for transmitting said image data, a selection means for selecting a set of image data to become the object of processing out of said image data, a processing information generating means for generating processing information of said set of image data selected, a second network means for transmitting said processing information, and an image data processing means for processing said image data connected to said first network means and said second network means.

The structure (2) to solve the above-mentioned problems is an image processing system as set forth in the structure (1), characterized by it that the aforesaid image data processing means at least comprises a first processing means connected to said first network means, a second processing means connected to said second network means, and a memory means for memorizing at least the aforesaid image data connected to said first processing means and said second processing means.

The structure (3) to solve the above-mentioned problems is an image processing system as set forth in the structure (1) or (2), characterized by it that the aforesaid second network and/or the aforesaid second processing means is connected to a public network.

The structure (4) to solve the above-mentioned problems is an image processing system as set forth in any one of the structures (1) to (3), characterized by it that said image processing system further comprises a printing means connected to the aforesaid image data processing means, at least a condition of the printing of the aforesaid selected set of image data by said printing means is included in the aforesaid processing information generated, and said image data processing means transmits said set of image data selected and said processing information to said printing means.

The structure (5) to solve the above-mentioned problems is an image processing system as set forth in any one of the structures (1) to (4), characterized by it that the aforesaid trigger device for image pickup comprises a display means for a trigger device, and the aforesaid image data processing means generates image data for display on the basis of the aforesaid image data, and transmits said image data for display to said display means for a trigger device through the aforesaid first network means.

The structure (6) to solve the above-mentioned problems is an image processing system as set forth in any one of the structures (1) to (5), characterized by it that said image processing system further comprises a display means for confirmation provided in correspondence to the aforesaid image pickup means, and the aforesaid image data processing means generates image data for display on the basis of the aforesaid image data, and transmits said image data for display to said display means for confirmation through the aforesaid first network means.

The structure (7) to solve the above-mentioned problems is an image processing system as set forth in any one of the structures (1) to (6), characterized by it that said image processing system further comprises a display means for selection provided in correspondence to the aforesaid selection means, and the aforesaid image data processing means generates image data for display on the basis of the aforesaid image data, and transmits said image data for display to said display means for selection through the aforesaid second network means.

The structure (8) to solve the above-mentioned problems is an image processing system as set forth in any one of the structures (1) to (7), characterized by it that said image pickup means comprises a trigger device identifying ID detecting means for detecting a trigger device identifying ID which has been given to the aforesaid trigger device for image pickup beforehand, and a data combining means for combining the aforesaid image data with at least said trigger device identifying ID, and said image data combined with said ID are transmitted to the aforesaid first network means.

The structure (9) to solve the above-mentioned problems is an image processing system as set forth in the structure (8), characterized by it that the aforesaid image pickup means is given an image pickup apparatus identifying ID beforehand, and the aforesaid data combining means combines the aforesaid image data with at least the aforesaid image pickup apparatus identifying ID.

The structure (10) to solve the above-mentioned problems is an image processing system as set forth in the structure (8) or (9), characterized by it that the aforesaid image pickup means comprises an image pickup time information obtaining means for obtaining an image pickup time information including a time when image pickup of the aforesaid photographic object is done, and the aforesaid data combining means combines the aforesaid image data with said image pickup time information.

The structure (11) to solve the above-mentioned problems is a print order receiving apparatus which receives a print order for image data memorized in correspondence to a trigger device identifying ID to an image data processing means for processing said image data in such a way as to combine it with a trigger device for image pickup having a trigger device identifying ID given beforehand, characterized by comprising
a trigger device identifying ID obtaining means for obtaining said trigger device identifying ID,
an output request transmitting means for transmitting a request for outputting image data corresponding to said trigger device identifying ID to said image data processing means,
an image data receiving means for receiving image data transmitted in response to said request for outputting,
a display means for displaying images based on said image data,
a print order inputting means for inputting a print order corresponding to said image data displayed,
a print order information generating means for generating print order information on the basis of said print order, and
a print order information transmitting means for transmitting said print order information.

The structure (12) to solve the above-mentioned problems is a print order receiving apparatus as set forth in the structure (11) characterized by further comprising an image selecting means for selecting an image to be printed out of the aforesaid images displayed.

The structure (13) to solve the above-mentioned problems is a print order receiving apparatus which receives a print order for image data memorized in correspondence to a trigger device identifying ID to an image data processing means for processing said image data in such a way as to combine it with a trigger device for image pickup having a trigger device identifying ID given beforehand, characterized by comprising
an in-area trigger device identifying ID obtaining means for obtaining the identification ID of said trigger device for image pickup existing in a specified area,
an output request transmitting means for transmitting a request for outputting image data corresponding to said trigger device identifying ID to said image data processing means,
an image data receiving means for receiving image data transmitted in response to said request for outputting,
a memory means for image display for memorizing said image data received,
a display means for displaying an image based on said image data,
a print order inputting means for inputting a print order corresponding to said image displayed,
a print order information generating means for generating print order information on the basis of said print order, and
a print order information transmitting means for transmitting said print order information.

The structure (14) to solve the above-mentioned problems is a print order receiving apparatus as set forth in the structure (13) characterized by it that the aforesaid in-area trigger device identifying ID obtaining means obtains a plurality of trigger device identifying ID's.

The structure (14) to solve the above-mentioned problems is a print order receiving apparatus as set forth in the structure (13) or (14) characterized by it that the aforesaid output request transmitting means transmits a request for outputting at least one or more sets of image data for each of said plurality of trigger device identifying ID's.

The structure (16) to solve the above-mentioned problems is a print order receiving apparatus as set forth in the structure (13), (14), or (15) characterized by it that the aforesaid memory means for image display memorizes a plurality of sets of image data corresponding to the aforesaid plurality of trigger device identifying ID's, and comprises an image display changing means for changing images to be displayed by the aforesaid display means at every definite time interval by selecting a set of image data for said image to be displayed out of the plural sets of image data memorized by said memory means for image display.

The structure (17) to solve the above-mentioned problems is a print order receiving apparatus as set forth in the structure (13), (14), (15), or (16) characterized by it that the aforesaid order information generating means comprises an image data erasing means for erasing image data in the aforesaid memory means for image display.

The structure (18) to solve the above-mentioned problems is a print order receiving apparatus as set forth in the structure (17) characterized by it that the aforesaid image data erasing means erases image data relating to the aforesaid print order on the basis of the input of said print order.

The structure (19) to solve the above-mentioned problems is a print order receiving apparatus as set forth in the structure (17) characterized by it that the aforesaid image data erasing means erases the aforesaid image data which have experienced the passage of a definite time after memorization.

The structure (20) to solve the above-mentioned problems is an image pickup apparatus for obtaining image data by imaging a photographic object on the basis of a trigger signal for image pickup transmitted from a trigger device for image pickup, characterized by comprising
a trigger device identifying ID detecting means for detecting a trigger device identifying ID of said trigger device for image pickup,
an image pickup means for obtaining image data by imaging a photographic object,
a data combining means for combining said image data with said trigger device identifying ID,
a transmitting means for transmitting image data and trigger device identifying ID combined by said data combining means,
a photographic object detecting means for detecting that said trigger device for image pickup held by said photographic object has come within a range where image pickup can be done, an intention of photographing indicating signal detecting means for detecting a signal indicating an intention of photographing issued from the aforesaid trigger device for image pickup which has come within the aforesaid range where image pickup can be done, and
an image data transmission permitting means for permitting the transmission of image data by the aforesaid transmitting means in response to the aforesaid intention of photographing indicating signal.

The structure (21) to solve the above-mentioned problems is an image pickup apparatus as set forth in the structure (20), characterized by further comprising a trigger signal for image pickup detecting means for detecting a trigger signal for image pickup transmitted from the aforesaid trigger device for image pickup, and carrying out image pickup on the basis of said trigger signal for image pickup detected by said trigger signal for image pickup detecting means.

The structure (22) to solve the above-mentioned problems is an image pickup apparatus as set forth in the structure (20) or (21), characterized by further comprising an image pickup timing information transmitting means for transmitting image pickup timing information to the aforesaid trigger device for image pickup in response to the aforesaid trigger signal for image pickup.

The structure (23) to solve the above-mentioned problems is an image pickup apparatus as set forth in the structure (20), (21), or (22), characterized by further comprising an image pickup timing notifying means for notifying an image pickup timing in response to the aforesaid trigger signal for image pickup.

The structure (24) to solve the above-mentioned problems is an image pickup apparatus as set forth in any one of the structures (20) to (23), characterized by further comprising an image pickup apparatus information transmitting means for transmitting image pickup apparatus information to the trigger device for image pickup which sends out the aforesaid identification signal detected.

The structure (25) to solve the above-mentioned problems is an image pickup apparatus as set forth in the structure (24), characterized by it that, as regards the aforesaid image pickup apparatus information, at least one selected out of the location information of the image pickup apparatus, the kind of the image pickup apparatus, the state of the image pickup apparatus, and the waiting time until the image pickup apparatus practices imaging is transmitted as the information.

The structure (26) to solve the above-mentioned problems is an image pickup apparatus as set forth in any one of the structures (20) to (25), characterized by further comprising an oscillator means for generating an oscillation wave of a constant frequency, a resonance wave detecting means for detecting a resonance wave with respect to said oscillation wave, and a trigger device identifying ID specifying means for specifying the aforesaid trigger device identifying ID on the basis of said resonance wave.

The structure (27) to solve the above-mentioned problems is an image pickup apparatus as set forth in any one of the structures (20) to (26), characterized by it that the aforesaid trigger device identifying ID is specified on the basis of the period of the beat oscillation wave generated between the oscillation wave which the aforesaid oscillator means generates and said resonance wave.

The structure (28) to solve the above-mentioned problems is an image pickup apparatus as set forth in any one of the structures (20) to (27), characterized by further comprising image data for display generating means for generating image data for display based on the aforesaid image data, and image data for display transmitting means for transmitting said image data for display to the aforesaid trigger device for image pickup.

The structure (29) to solve the above-mentioned problems is an image pickup apparatus as set forth in any one of the structures (20) to (28), characterized by further comprising a drive means for driving the aforesaid image pickup means in such a way as to make a photographic object holding the aforesaid trigger device image pickup come within a range where image pickup can be done.

The structure (30) to solve the above-mentioned problems is an image pickup apparatus as set forth in the structure (29), characterized by it that the aforesaid drive means makes at least one kind of driving action selected out of zooming, focusing, and panning for the aforesaid photographic object.

The structure (31) to solve the above-mentioned problems is an image pickup apparatus as set forth in any one of the structures (20) to (30), characterized by further comprising a display means for confirmation for displaying an image for confirmation based on image data obtained by the aforesaid image pickup means.

The structure (32) to solve the above-mentioned problems is an image pickup apparatus as set forth in the structure (31), characterized by it that the aforesaid display means for confirmation carries out an image display based on the aforesaid image data in real time.

The structure (33) to solve the above-mentioned problems is an image pickup apparatus as set forth in the structure (31), characterized by it that the aforesaid display means for confirmation carries out an image display based on image data obtained through image pickup on the basis of the aforesaid trigger signal for image pickup.

The structure (34) to solve the above-mentioned problems is a trigger device for image pickup comprising at least
a trigger device identifying ID sending means for sending out a trigger device identifying ID, which has been given to said trigger device beforehand, to an image pickup means,
a receiving means for receiving image pickup apparatus information which is sent back by said image pickup means in response to the sending out of said trigger device identifying ID,
a notifying means for carrying out the notification of information based on said image pickup apparatus information received,
means for inputting an image pickup instruction to instruct the practice of image pickup by said image pickup means, and
a trigger signal for image pickup transmitting means for transmitting a trigger signal for image pickup to said image pickup means in response to said image pickup instruction.

The structure (35) to solve the above-mentioned problems is a trigger device for image pickup as set forth in the structure (34) characterized by further comprising means for inputting an indication of intention of photographing before the input of the aforesaid image pickup instruction, and an indication of intention of photographing transmitting means for transmitting said indication of intention of photographing to the aforesaid image pickup apparatus.

The structure (36) to solve the above-mentioned problems is a trigger device for image pickup as set forth in the structure (34) or (35) characterized by further comprising an image data receiving means for receiving image data obtained by the aforesaid image pickup means, and a trigger device displaying means for displaying images based on said image data.

### BRIEF DESCRIPTION OF THE DRAWINGS

Fig. 1 is a drawing showing an example of an image processing system of this invention;
Fig. 2 is a drawing representing the image processing system shown in Fig. 1 expressed in a more concrete form;
Fig. 3 is a drawing showing an example of a remote control device;
Fig. 4 is the functional block diagram of a remote control device;
Fig. 5 is a drawing showing an example of an image pickup apparatus;
Fig. 6 is a functional block diagram of an image pickup apparatus;
Fig. 7 is a drawing showing an example of a print order receiving apparatus;
Fig. 8 is a functional block diagram of a print order receiving apparatus;
Fig. 9 is a drawing showing another example of a print order receiving apparatus;
Fig. 10 is a drawing showing an example of practice of an image pickup process according to this invention;
Fig. 11 is a drawing showing another example of practice of an image pickup process according to this invention;
Fig. 12 is a drawing showing an example of practice of a print order according to this invention;
Fig. 13 is a drawing showing another example of practice of a print order according to this invention; and
Fig. 14 is a drawing showing a printing operation in a print system of this invention.

### DETAILED DESCRIPTION OF THE PREFERRED EMBODIMENT

In the following, the embodiment of this invention will be explained in detail.

### (EXPLANATION OF IMAGE PROCESSING SYSTEMS OF THE STRUCTURES (1) TO (10))

An image processing system of this invention is characterized by comprising a trigger device for image pickup capable of transmitting a trigger signal for image pickup, an image pickup means for obtaining image data by imaging a photographic object in response to said trigger signal for image pickup, a first network means for transmitting said image data, a selection means for selecting image data to become the object of processing out of said image data, a processing information generating means for generating processing information of said selected image data, a second network means for transmitting said processing information, and an image data processing means for processing said image data connected to said first network means and said second network means. Further, it is desirable that 1) the aforesaid image data processing means at least comprises a first processing means connected to said first network means, a second processing means connected to said second network means, and a memory means for memorizing at least the aforesaid image data connected to said first processing means and said second processing means; 2) the aforesaid second network and/or the aforesaid second processing means is connected to a public network; 3) said image processing system further comprises a printing means connected to the aforesaid image data processing means, at least a condition of printing of the aforesaid selected image data by said printing means is included in the aforesaid processing information generated, and said image data processing means transmits said image data and said processing information to said printing means; 4) the aforesaid trigger device for image pickup comprises a display means for a trigger device, and the aforesaid image data processing means generates image data for display on the basis of the aforesaid image data, and transmits said image data for display to said display means for a trigger device through the aforesaid first network means; 5) said image processing system further comprises a display means for confirmation provided in correspondence to the aforesaid image pickup means, and the aforesaid image data processing means generates image data for display on the basis of the aforesaid image data, and transmits said image data for display to said display means for confirmation through the aforesaid first network means; 6) said image processing system further comprises a display means for selection provided in correspondence to the aforesaid selection means, and the aforesaid image data processing means generates image data for display on the basis of the aforesaid image data, and transmits said image data for display to said display means for selection through the aforesaid second network means; 7) the aforesaid image pickup means comprises trigger device identifying ID detecting means for detecting a trigger device identifying ID which has been given to the aforesaid trigger device for image pickup beforehand, and a data combining means for combining the aforesaid image data with at least said trigger device identifying ID, and said image data combined with said ID are transmitted to the aforesaid first network means; 8) the aforesaid image pickup means is given an image pickup apparatus identifying ID beforehand, and the aforesaid data combining means combines the aforesaid image data with at least the aforesaid image pickup apparatus identifying ID; 9) the aforesaid image pickup means comprises an image pickup time information obtaining means for obtaining image pickup time information including a time when image pickup of the aforesaid photographic object is done, and the aforesaid data combining means combines the aforesaid image data with said image pickup time information.

In this invention, a trigger signal for image pickup means an actuating signal for starting a series of image pickup operations for a photographic object by means of an image pickup apparatus, and to state it concretely, a signal obtained by modulating an electromagnetic wave, visible light, invisible light, ultrasonic wave, audible sound, low-frequency wave, etc. by a modulation method known to public, and a pulse wave can be used.

In this invention, the words "image data" mean digital data obtained through photoelectric conversion by means of an image pickup apparatus and A/D conversion, and are data from which a visible image can be reproduced by an arbitrary display means (for example, a CRT display, a liquid crystal display, and a plasma display), or a printing means (for example, an ink jet printer, an electrophotographic printer, and a thermal transfer printer); to state it concretely, they mean digital data defined by various kinds of formats such as bitmap, JPEG, MPEG, TIFF, PICT, GIF, JPEG2000.

In this invention, "a network means" includes a transmission medium for transmitting digital data, its connection method, and its communication procedure, and various kinds of standards such as Ethernet, Apple Talk, USB (Universal Serial Bus), IEEE1394, Blue Tooth, and TCP/IP or an independent specification can be used.

In this invention, "processing information of image data" means information necessary for processing image data such as printing image data, converting image data into digital data of another format and transmitting them, or recording image data on an information recording medium; for example, in the case of printing, conditions for printing such as the number of prints to be produced, the paper sheet size, image resolution, and information on layout such as arranging plural images or adding a logo-mark are included; in the case where image data are transmitted after being converted into another format, the following bits of information such as the format name into which data are to be converted, image resolution, and the address of the destination of transmission (the mail address, URL, or directory path) are included; in the case where image data are recorded on an information recording medium, in addition to the case of conversion into another format, the kind of information recording medium, and the format of information recording (for example, ISO9660, Exif, DCF, or DIG35) are included.

In this invention, "a memory means" is an apparatus consisting of an information recording medium for which retrieving, reading out, writing, rewriting, and deleting of digital data can be done as occasion demands, and means for practicing and controlling the input and output of digital data; to state it concretely, it is possible to use a memory device known to public (for example, an SIMM, a DIMM, a flash memory, etc.), a magnetic recording device (for example, a hard disk device, a tape streamer, or the like), or an optical recording device (for example, a CD-ROM, a CD-RW, a DVD-ROM, a DVD-RAM, an MO, or the like).

In this invention, "a public network" means a network means through which various kinds of information transmissions by means of an arbitrary information processing apparatus other than the various means relating to this invention (for example, a personal computer, a game machine, a portable information terminal, or a KIOSK terminal) can be done; to state it concretely, WAN, Internet, communication by personal computer, etc. can be cited.

In this invention, "a printing means" is a means for forming a visible image based on image data on a recording medium such as a paper sheet, a plastic plate, clothing, ceramics, etc., and to state it concretely, a printer employing an arbitrary image forming method such as an ink jet method, a thermal transfer method, an electrophotographic method, and a silver halide method can be used.

In this invention, "image data for display" mean digital data which have less amount of data volume than the image data and can be used in forming visible images similar to visible images based on the image data by a display means or a printing means; to state it concretely, they are digital data to produce a lower-resolution image as compared to the image data, digital data of high compression ratio, digital data having less number of colors and gray levels, or digital data obtained by processing the combination of these.

In this invention, "a trigger device identifying ID" means identification information for identifying a trigger device for image pickup which has been previously given before the use of a trigger device for image pickup of this invention; for example, a serial number, a set of letters generated randomly, a set of letters arbitrarily given by a user, information to identify a user (a set of letters representing the address, name, telephone number, etc.) can be cited.

In this invention, "an image pickup apparatus identifying ID" means identification information for identifying an image pickup means of this invention, and in the case where an image processing system of this invention comprises a plurality of image pickup means, it is essential information; for example, a serial number, a set of letters generated randomly, a set of letters given arbitrarily (for example, the name of a place where the image pickup means is installed, a latitude and a longitude, etc.) can be cited.

In this invention, "image pickup time information" means information indicating the time when image pickup of a photographic object is done by an image pickup means, and it includes the year, month, day, hour, minute, second, and time difference, or the combination of these bits of information.

In this invention, "data combining" means digital data processing for combining a set of image data with any one of the above-mentioned trigger device identifying ID, image pickup apparatus identifying ID, image pickup time information, etc. or with a combination of these; to state it concretely, it is desirable that some letters or symbols are added to a specified position of a set of image data formed in a format known to public (for example, a data area called a header or a tag) in a specified form, or digital data defining the association between the image data and the above-mentioned ID's and information in a specified format are generated, in order that the above-mentioned ID's and information combined with the image data may be uniquely referred to when the image data are referred to at a later time.

Image processing systems of the above-mentioned structures (1) to (10) will be explained concretely with reference to the drawings.

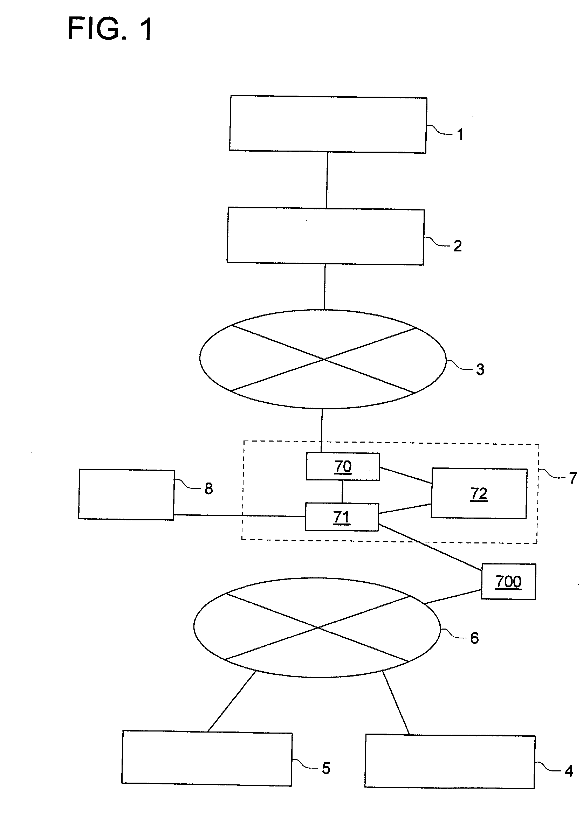

Fig. 1 is an illustration showing an example of an image processing system of this invention.

1 denotes a trigger device for image pickup capable of transmitting a trigger signal for image pickup, and for example, a trigger device for image pickup to be described later, a cellular phone, or the like can be used.

2 denotes an image pickup means for obtaining image data through imaging a photographic object in response to a signal transmitted from the above-mentioned trigger device for image pickup 1, and for said image pickup means, for example, an image pickup apparatus to be described later can be used.

3 denotes a first network means for transmitting image data obtained by the above-mentioned image pickup means 2, and for example, an information transmitting network known to public can be used. As regards the form of connection of the network, it is appropriate any one of a daisy chain connection in which peripheral apparatus are connected serially, a bus type (a bus network: a method in which all nodes (terminals) are connected to a single cable such as 10BASE5 or 10 10BASE2), a star type (a star connection: a method in which all terminals are arranged radiately with a host computer placed at the center), a ring type (a ring network: a method in which terminals and a host computer are connected annularly), etc. Further, as regards the transmission medium, any one of a metal wire, an optical fiber, space transmission, etc. can be used. Moreover, for the method of transmission and the protocol (communication protocol), any one known to public can be used.

4 denotes a selection means for selecting a set of image data to become the object of processing out of the above-mentioned transmitted image data, and 5 denotes a processing information generating means for generating processing information of the above-mentioned image data selected. For these selection means 4 and processing information generating means 5, for example, a print order receiving apparatus to be described later can be employed.

6 denotes a second network means for transmitting the above-mentioned processing information, and the same structure as the above-mentioned first network is appropriate for it.

7 denotes an image data processing means for processing the above-mentioned image data connected to the above-mentioned first network means 3 and the above-mentioned second network means 6.

As regards the desirable example of the embodiment of the image data processing means 7, as shown in Fig. 1, it should have a structure comprising a first processing means 70 connected to the above-mentioned first network means 3, a second processing means 71 connected to the above-mentioned second network means 6, and a memory means 72 for memorizing at least the above-mentioned image data connected to said first processing means 70 and said second processing means 71.

8 denotes a printing means connected to the above-mentioned image data processing means 7, and it is desirable that in the above-mentioned processing information transmitted through the second network means 6 when a print is produced in this printing means 8, at least a print condition by the printing means 8 for the image data selected by the above-mentioned selection means 4 is included in order to practice the printing with certainty.

In this printing, it is desirable that the above-mentioned image processing means 7 transmits the above-mentioned image data and the processing information for a user to obtain a print that he asks for with more certainty.

Further, another desirable example of the embodiment of this invention is that the above-mentioned image processing means 7 generates image data for display on the basis of the above-mentioned image data, and transmits such image data for display through the above-mentioned first network means 3 or second network means 6.

In the case where the above-mentioned image data for display are generated, the following can be considered: (1) it is desirable that a display means for a trigger device is provided in the above-mentioned trigger device, and the generated image data for display are transmitted to said display means for a trigger device through the first network means 3 to display the image, because a user can confirm the outline of the image data obtained through image pickup by a device (trigger device) kept to his hand; (2) it is desirable that a display means for confirmation is provided in correspondence to the above-mentioned image pickup means, and the generated image data for display are transmitted to said display means for confirmation through the first network means 3 to display the image, because a user can confirm the outline of the image data obtained through image pickup at the side of the image pickup apparatus which he has used in image pickup; (3) it is desirable that a display means for selection with correspondence to the above-mentioned selection means is provided, and the generated image data for display are transmitted to said display means for selection, because image data can be quickly displayed in confirming the image data to be selected by the selection means.

To provide a display means for confirmation with correspondence to an image pickup means is to provide a display means for confirmation integrally with said image pickup means or in the neighborhood of said image pickup means; in the same way, a display means for selection provided in correspondence to a selection means indicates a display means for selection provided integrally with said selection means or in the neighborhood of said selection means.

In a system of this invention, in order to enhance versatility of image data obtained through image pickup in making prints, it is desirable that the above-mentioned second network means 6 and/or the above-mentioned processing means 7 is connected to a public network 700.

It is desirable that the above-mentioned trigger device for image pickup 1 has been given a trigger device identifying ID beforehand, and the above-mentioned image pickup means 2 comprises a trigger device identifying ID detecting means for detecting a trigger device identifying ID, and a data combining means for combining the above-mentioned image data with at least said trigger device identifying ID; it is desirable that the image data which have been combined with the ID by this data combining means are transmitted to the above-mentioned network means 3, because image data corresponding to a user can be certainly read out in practicing a print order.

It is desirable the mode of the invention in which the above-mentioned image pickup means 2 has been given an image pickup apparatus identifying ID beforehand, and the above-mentioned image data are combined with at least the above-mentioned image pickup apparatus identifying ID by the above-mentioned data combining means, because, when image data which have been obtained through sensing at a specified place are requested, the image data requested can be obtained with certainty.

Further, it is desirable that the above-mentioned data combining means combines the above-mentioned image data with at least the time information on the image pickup by the above-mentioned image pickup means, because, when the image data which have been obtained through image pickup at a specified time are requested, or when image data arranged in a time sequence are requested, the desired image data can be obtained with certainty.

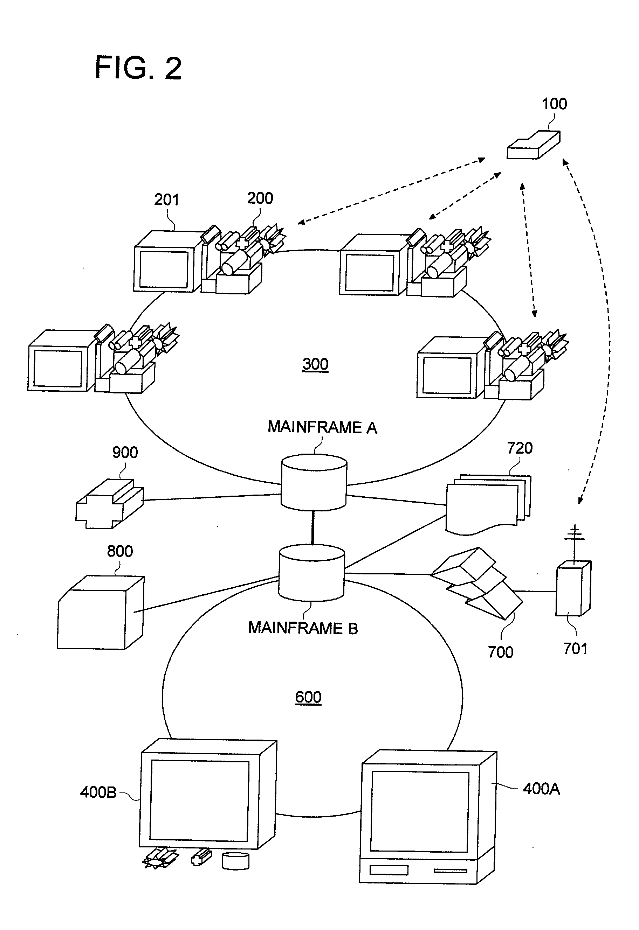

Next, an image processing system which is obtained by making more concrete the image processing system shown in Fig. 1 is shown in Fig. 2.

Fig. 2 shows an example of a system composed of several apparatus connected in a daisy chain connection by means of an input chain 300 and an output chain 600; for both of these input chain 300 and output chain 600, an information transmitting network known to public can be used.

The input chain 300 to be employed in the example shown in the drawing is the first network means of this invention mainly used in transmission of image data, and is connected to an image pickup apparatus 200 as an example of the image pickup means 2 and a mainframe A as the first processing means.

The mainframe A is a central comprehensive information processing system, processes image data which have been transmitted mainly from the image pickup apparatus 200, transmits the data combined with the trigger device identifying ID, the image pickup apparatus identifying ID, etc. to a filing system 720 as an example of the memory means 72, and generates image data for display to be transmitted to a trigger device 100 as an example of the trigger device for image pickup 1 and to a monitor 201 of the image pickup apparatus 200. It is desirable that said image data for display are data for a thumbnail image which is a small-sized graphic view.

The output chain 600 is the second network means of this invention to be used mainly in transmission and reception of image data for display for print order processing, transmission and reception of print order information data, and transmission and reception of control data, and is connected to print order receiving apparatus 400A and 400B as examples of the selection means 4, a print system 800, a public network 700 (net system), a mobile communication network 701, and a mainframe B.

The mainframe B is a central comprehensive information processing system which reads out image data, which have been requested mainly from the print order receiving apparatus 400A or 400B, or a remote control device 100, from the filing system 720 to generate image data for display, transmits them to the print order receiving apparatus 400A or 400B, and carries out transmission and reception of information with the net system 700 represented by Internet or with the mobile communication network 701 and transmission of image data and print order data to a print system 800; it corresponds to the second processing means of this invention.

The filing system 720 corresponds to the memory means of this invention, which practices mainly memorization of image data and transmission and reception of image data with the mainframe A and the mainframe B.

In this invention, the above-mentioned mainframe A and mainframe B function as a control means, the above-mentioned filing system functions as a memory means, the mainframe A functions as an image input controlling means, and the above-mentioned mainframe B functions as an image output controlling means.

In the above-mentioned mode, it is desirable that the duties are separately borne in such a way that the mainframe A bears the duty of image pickup system and the mainframe B bears the duties of order system and printing system. Therefore, it is desirable that the filing system can be accessed from both of the mainframe A and the mainframe B.

For communication between the image pickup apparatus 200 and the trigger device for image pickup 100, both of a method in which communication is directly done by using a communication medium and a communication procedure known to public and a method in which communication is done through the mobile communication network 701, the net system 700, the mainframe B, the mainframe A, the input chain 300, etc. can be used; however, the direct communication method is desirable because it is simple in its system, and there is less risk of influence to a human body caused by the trigger device emitting a strong electromagnetic wave.

The print system 800 corresponds to the printing means of this invention, which represents a group of apparatus necessary for receiving image data and order data to carry out printing, and consists of at least a control apparatus (a computer) and a printer. The image forming method of the printer is not particularly limited and any one of the methods known to public can be employed.

### (EXPLANATION OF THE TRIGGER DEVICES FOR IMAGE PICKUP OF THE STRUCTURES (34) TO (36))

A trigger device for image pickup of this invention is characterized by comprising at least
a trigger device identifying ID sending means for sending out a trigger device identifying ID, which has been given beforehand, to an image pickup means,
a receiving means for receiving image pickup apparatus information which is sent back by said image pickup means in response to the sending-out of said trigger device identifying ID,
a notifying means for carrying out the notification of information based on said image pickup apparatus information received,
means for inputting an image pickup instruction to instruct the practice of image pickup by said image pickup means, and
a trigger signal for image pickup transmitting means for transmitting a trigger signal for image pickup to said image pickup means in response to the input of said image pickup instruction.

Further, it is desirable that 1) said trigger device for image pickup further comprises means for inputting an indication of intention of photographing before the input of the aforesaid image pickup instruction, and an indication of intention of photographing transmitting means for transmitting said indication of intention of photographing to the aforesaid image pickup apparatus; and 2) said trigger device for image pickup further comprises an image data receiving means for receiving image data obtained by the aforesaid image pickup means, and an image for trigger device displaying means for displaying images based on said image data.

The trigger device for image pickup is a device mainly for transmitting the above-mentioned trigger signal for image pickup to the above-mentioned image pickup apparatus, and also it is appropriate that it has a function to start a series of image pickup operations by said image pickup apparatus, and on top of it, it has a function to access a mobile communication network represented by a cellular phone, and an information notifying function of receiving and displaying image data and various kinds of information transmitted from an image pickup means or an image data processing means through the mobile communication network and the network means. Further, the trigger device for image pickup is also called a remote control device.

The trigger device identifying ID sending means is a means for sending out the above-mentioned trigger device identifying ID directly or through any one of various kinds of network means and an information processing apparatus to an image pickup means, and a communication apparatus and a communication procedure known to public can be used.

In this invention, "the image pickup apparatus information" means digital data to be sent back by the image pickup means in response to the sending of the above-mentioned trigger device identifying ID by the above-mentioned trigger device for image pickup, and it is desirable that it includes at least one selected out of the location information of the image pickup apparatus, the kind of the image pickup apparatus, the state of the image pickup apparatus, and the waiting time until the practice of image pickup by the image pickup apparatus.

In this invention, "the notification of information" means that the above-mentioned trigger device for image pickup notifies the location information of the image pickup apparatus, the kind of the image pickup apparatus, the state of the image pickup apparatus, the waiting time until the practice of image pickup by the image pickup apparatus, etc. to a user by means of a visible image or a voice, and the notifying means is a display device, a speaker, or a light emitting device which is necessary for carrying out said notification of information.

The above-mentioned receiving means can receive a signal sent back by the image pickup apparatus in response to the sending-out of the above-mentioned identifying signal, and the above-mentioned notifying means can carry out the notification of information to a user on the basis of a signal received by said receiving means.

For the information relating to this notification of information, some information concerning the image pickup apparatus having transmitted the sent back signal on which the information is based, information to request triggering by notifying that image pickup can be done, etc. can be cited.

In this invention, "the input of image pickup instruction" means that a user inputs an instruction for transmitting a trigger signal for image pickup to an image pickup apparatus by using a trigger device for image pickup, and that he carries out a specified operation such as pressing a button or input a voice for the trigger device for image pickup. Hence, the means for inputting an image pickup instruction is one to fulfil a duty like a shutter button of what is called a camera.

In this invention, "the input of an indication of intention of photographing means that a user inputs an indication of intention for notifying his intention of photographing to an image pickup apparatus by using a trigger device for image pickup; when said input of an indication of intention of photographing is practiced, the trigger device for image pickup transmits a signal of the indication of intention of photographing to said image pickup apparatus, and the image pickup apparatus, which has received the signal of the indication of intention of photographing, can carry out the preparation operations for photographing such as auto-focusing, auto-zooming, auto-panning, and exposure adjusting for photographing; this is desirable for the image pickup apparatus to practice image pickup of a photographic object with certainty. For the means for inputting an indication of intention of photographing, the same one as the means for inputting the above-mentioned photographing instruction can be used, but some different operations from those to be done when said photographing instruction is inputted should be carried out (for example, half-pressing of a button not full pressing, and a single click of a button not double clicks).

Further, it is desirable that the trigger device for image pickup of this invention has such a structure that receives image data obtained by an image pickup apparatus from the image pickup apparatus and displays the image based on said image data on a display means for a trigger device, because the image photographed can be confirmed at the time of pickup of the image.

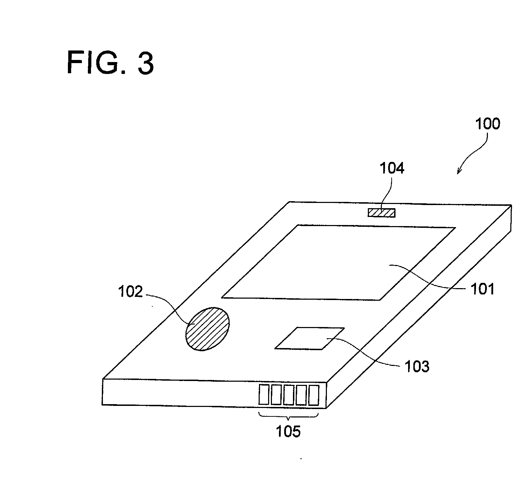

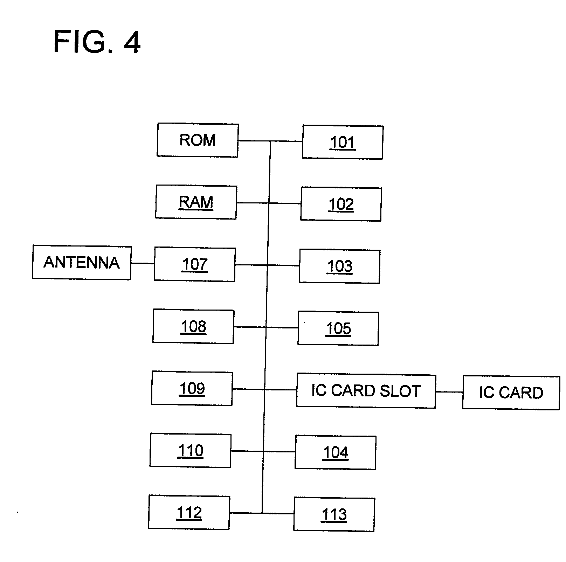

Next, a remote control device to be employed as an example of the trigger device for image pickup of the structures (34) to (36) will be explained on the basis of Fig. 3 and Fig. 4. Fig. 3 is a drawing showing an example of the remote control device, and Fig. 4 shows the functional block diagram of the remote control device.

In the remote control device shown in Fig. 3 and Fig. 4, the following are used, namely, a reception and transmission unit is used for the above-mentioned trigger device identifying ID transmitting means, reception means, image pickup trigger signal transmitting means, and indication of intention of photographing transmitting means, a speaker and/or an LCD monitor is used for the above-mentioned notifying means, an image pickup button and/or a microphone is used for the means for inputting the above-mentioned photographing instruction and said indication of intention of photographing, and an LCD monitor is used for the above-mentioned display means for a trigger device.

The remote control device 100 shown in Fig. 3 as an example comprises an LCD monitor 101 (liquid crystal display) on the upper side of its parallelopipedon-shaped case member, and is provided with a speaker 102 and an image pickup button 103 under said monitor 101. In the upper part of said monitor 101, there is provided a microphone 104. Further, on the bottom surface of the case member, there is provided a connector 105. On the top surface of the case member, although not shown in the drawing, there is provided an IC card slot.

Further, in addition to the above-mentioned, the remote control device 100 comprises an antenna 106, receiving and sending unit 107 (receiving means), a sending unit 108 (sending means), a control unit 109, a power source 110, a CCD 112, and an LED 113.

The IC card slot (not shown in the drawing) has such a structure that when an IC card, which is provided to a user, is inserted, an individual ID corresponding to the trigger device identifying ID is supplied to the remote control device for the identification.

The sending unit 108 has a structure to practice the sending-out of a signal having a specified frequency making a resonance to a low-frequency wave transmitted from the image pickup apparatus 200, in order that the image pickup apparatus (refer to Fig. 2) may carry out the identification and the pursuit of the remote control device.

On the LCD (liquid crystal display) monitor 101, images based on image data for display to be used for confirming an image obtained and the information on where the image pickup apparatus 200 is located, the information on whether or not it is able to practice image pickup, or the like are displayed. Further, also it is possible to display a visible image based on arbitrary information such as the guide in the theme park, event information, and an advertisement on the LCD monitor. In this case, the above-mentioned arbitrary information is memorized in the above-mentioned ID card, or is supplied through a network means known to public.

The connector 105 is provided for connecting the print order receiving apparatus 400A, and by inserting it into the slot of the print order receiving apparatus 400A, the remote control device identifying ID can be read.

The speaker 102 has a function to provide information for a user by a voice at the time of image pickup. Further, also it is possible to make the speaker issue a voice based on arbitrary information such as the guide in the theme park, event information, and an advertisement. In this case, the above-mentioned arbitrary information is memorized in the above-mentioned ID card, or is supplied through a network means known to public.

The microphone 104 is capable of responding to a voice of a user as an input of a photographing instruction or an indication of intention of photographing at the time of image pickup, in place of the image pickup button 103.

It is desirable to make the receiving and transmitting unit 107 have a structure to practice communication with the mobile communication network 701, and also to be capable of communicating with the image pickup apparatus 200.

Further in this embodiment, for the above-mentioned monitor, an LCD is employed, but it is also possible to use a projector (an apparatus for projecting a monitor image on a screen) in place of an LCD.

Further, it is also possible to make the remote control device have a structure provided with an image pickup unit and a memory to make it possible for a user to carry out image pickup operation arbitrarily to transmit the image data obtained through any one of various kinds of network means to the mainframe B; in this case, it becomes possible for a user to carry out photographing at an active object angle and an angle of view by the user; this is desirable.

### (EXPLANATION OF THE IMAGE PICKUP APPARATUS OF THE STRUCTURES (20) TO (33))

An image pickup apparatus of this invention is an image pickup apparatus for obtaining image data by imaging a photographic object on the basis of a trigger signal for image pickup transmitted from a trigger device for image pickup, characterized by comprising
a trigger device identifying ID detecting means for detecting a trigger device identifying ID of said trigger device for image pickup,
an image pickup means for obtaining image data by imaging a photographic object,
a data combining means for combining said image data to said trigger device identifying ID,
a transmitting means for transmitting image data and trigger device identifying ID linked by said data combining means,
a photographic object detecting means for detecting that said trigger device for image pickup held by said photographic object has come within a range where image pickup can be done,
an intention of photographing indicating signal detecting means for detecting a signal indicating an intention of photographing which is sent from the aforesaid trigger device for image pickup having come within the aforesaid range of photographing being enabled, and
an image data transmission permitting means for permitting the transmission of image data by the aforesaid transmitting means in response to the aforesaid intention of photographing indicating signal. Further, it is desirable that 1) said image pickup apparatus further comprises a trigger signal for image pickup detecting means for detecting a trigger signal for image pickup transmitted from the aforesaid trigger device for image pickup, and carries out image pickup on the basis of said image pickup trigger signal detected by said image pickup trigger signal detecting means; 2) said image pickup apparatus further comprises an image pickup timing information transmitting means for transmitting image pickup timing information to the aforesaid trigger device for image pickup in response to the aforesaid image pickup trigger signal; 3) said image pickup apparatus further comprises a image pickup timing notifying means for notifying an image pickup timing in response to the aforesaid image pickup trigger signal; 4) said image pickup apparatus further comprises an image pickup apparatus information transmitting means for transmitting image pickup apparatus information to the aforesaid trigger device for image pickup issuing an identification signal detected; 5) as regards the aforesaid image pickup apparatus information, at least one selected out of the location information of the image pickup apparatus, the kind of the image pickup apparatus, the state of the image pickup apparatus, and the waiting time until the image pickup apparatus practices imaging is transmitted as the information; 6) said image pickup apparatus further comprises an oscillator means for generating an oscillation wave of a constant frequency, a resonance wave detecting means for detecting a resonance wave with respect to said oscillation wave, and a trigger device identifying ID specifying means for specifying the aforesaid trigger device identifying ID on the basis of said resonance wave; 7) the specifying of the aforesaid trigger device identifying ID is detected on the basis of the period of the beat oscillation wave generated between the oscillation wave which the aforesaid oscillator means generates and said resonance wave; 8) said image pickup means further comprises image data for display generating means for generating image data for display based on the aforesaid image data, and image data for display transmitting means for transmitting said image data for display to the aforesaid trigger device for image pickup; 9) said image pickup apparatus further comprises a drive means for driving the aforesaid image pickup means in such a way that a photographic object holding the aforesaid trigger device for image pickup comes within a range where image pickup can be done; 10) the aforesaid drive means makes at least one kind of driving action selected out of zooming, focusing, and panning for the aforesaid photographic object; 11) said image pickup apparatus further comprises a display means for confirmation for carrying out image display based on image data obtained by the aforesaid image pickup means; 12) the aforesaid display means for confirmation carries out image display based on the aforesaid image data in real time; and 13) the aforesaid display means for confirmation carries out image display based on image data obtained through an operation for image pickup on the basis of the aforesaid image pickup trigger signal.

In this invention, "an image pickup means" is one that generates image data from signal levels (depending on incident light quantity) of an image to be recorded obtained by means of a photoelectric conversion device (image pickup device). For example, it consists at least of an image pickup device, a signal conversion circuit, an optical lens group and its drive circuit, a circuit for light emission, an image data inputting/outputting circuit, and a control circuit for these, which are all necessary for generating the above-mentioned image data; for example, what is called a digital camera can be used for it.

In this invention, "a photographic object" means a person or a thing to become an object of imaging by an image pickup apparatus of this invention, and desirably, it is a person who keeps and carries a trigger device for image pickup. In the case where a person does not carry a trigger device for image pickup, he is supposed to carry or to have on a mark for recognizing him being a photographic object or a identification signal sending device.

In this invention, "a range where image pickup can be done" means a range of space defined beforehand as a range where image data of a photographic object can be obtained by said image pickup apparatus; it is arbitrarily set beforehand on the basis of focusing range of the image pickup apparatus, angle of view, existence of an obstacle, etc.

In this invention, "detection of a photographic object" means to detect that said photographic object has come within the above-mentioned range where image pickup can be done, and the detection can be done through comparing the location of a trigger device for image pickup of this invention with the above-mentioned range where image pickup can be done.

In this invention, "a transmitting means" is a circuit, a connector, an information transmitting medium, and a procedure of communication for transmitting image data of photographic object obtained by an image pickup apparatus to another information processing apparatus; it is possible to employ the same structure as the above-mentioned network transmitting means for it.

In this invention, "permission of image data transmission" means to permit the transmission of image data from an image pickup apparatus to another information processing apparatus; for example, it means to control the physical connection or logical connection to another information processing apparatus, the cancel of regulation for the sending of digital data, etc.

In this invention, "image pickup timing information" means information for notifying to a photographic object a timing suitable for obtaining image data of the photographic object by an image pickup means when the photographic object is shot on the basis of a trigger signal for image pickup transmitted to the image pickup apparatus or the like; the image pickup trigger apparatus which has received said image pickup timing information gives the user the information through an image display or a voice representing the countdown up to the timing when the image pickup means obtains image data of the photographic object, or through doing something like that.

In this invention, "notification of an image pickup timing" means an operation which an image pickup apparatus itself practices in order to notify a photographic object of a timing suitable for obtaining image data of a photographic object by the image pickup means when the photographic object is photographed on the basis of a trigger signal for image pickup transmitted to the image pickup apparatus or the like; it is different from the case based on the above-mentioned image pickup timing information where the trigger device provides the information to the user. In this notification of an image pickup timing, by lighting a lamp, which has been installed beforehand in said image pickup apparatus, making a display, or giving out a voice from a speaker, the image pickup apparatus provides the information to the user through an image display or a voice representing the countdown up to the timing when the image pickup means obtains the image data of the photographic object, or through something like that.

In this invention, "the location information of an image pickup apparatus" means the information indicating the position where the image pickup apparatus is located when the image pickup apparatus obtains image data of a photographic object; for example, it is the name of the place where the image pickup means is installed, the latitude and the longitude, etc. Having received the location information, the trigger device for image pickup displays the position where the image pickup apparatus is located with a drawing or letters on the display device, to notify a user of the location of the image pickup apparatus.

In this invention, "the kind of an image pickup apparatus" means the information indicating the function and the performance which an image pickup apparatus has; for example, it is the information on whether the image pickup apparatus makes recording of a moving image or a still-standing image, the image resolution, into which the image pickup apparatus is classified, a color type or a monochromatic type, how wide is the angle of view at which the image pickup apparatus can do image pickup, etc. Having received the information on the kind of an image pickup apparatus, the trigger device for image pickup displays the function and performance of the image pickup apparatus with a drawing or letters on the display device to notify a user of the function and performance of the image pickup apparatus.

In this invention, "the state of an image pickup apparatus" means the information indicating the state of operation of an image pickup apparatus; for example, it is the information on whether or not the image pickup apparatus is able to shoot a photographic object immediately, whether or not there is a considerable time until it becomes able to do image pickup, whether or not it is in process of imaging another photographic object, etc. Having received the information on the state of the image pickup apparatus, the trigger apparatus for image pickup notifies a user of it by a display or a voice.

In this invention, "waiting time until an image pickup apparatus practices image pickup" means information obtained by measuring or estimating the time until image pickup can be practiced in the case where the image pickup apparatus cannot practice image pickup of a photographic object immediately for the reason that the image pickup apparatus is in process of obtaining image data of another photographic object or is subjected to a maintenance operation.

In this invention, "an oscillation wave of a constant frequency" means an oscillation wave obtained by the continuous oscillation at a specific frequency which is invariable or within a definite range.

In this invention, "a resonance wave" means an oscillation wave generated by receiving the above-mentioned oscillation wave of a constant frequency, and it means an electromagnetic wave generated by an oscillation at a specific frequency which is invariable or within a definite range.

In this invention, "a beat oscillation wave" means an oscillation wave which is generated by the difference of frequency between the above-mentioned oscillation wave of a constant frequency and the above-mentioned resonance wave, and it has a differential frequency between the respective specific frequencies of said oscillation wave of a constant frequency and said resonance wave.

In this invention, "driving of an image pickup means" is to drive various kinds of devices making up the image pickup means in order to make a photographic object come within a range where the image pickup apparatus can practice image pickup; it means, for example, an operation such as zooming, focusing, or panning.

In this invention, "zooming" means to change the field angle of a photographic object to be obtained by an image pickup apparatus by means of a group of optical lenses and an image sensor making up the image pickup apparatus; it becomes possible by zooming to obtain image data of an enlarged image of a photographic object or to obtain image data of an image with a photographic object and its background arranged in a good balance.

In this invention, "focusing" means to adjust the distance from the lens to the image forming plane for a photographic object in order to make the image forming plane coincide with the surface of the image sensor by using an adjustment mechanism of a group of optical lenses composing an image pickup apparatus, and by focusing, it becomes possible to obtain a sharp image of a photographic object.

In this invention, "panning" means to move an image pickup apparatus in the horizontal direction or in the vertical direction through a rotary movement or a parallel movement; it becomes possible by panning to obtain image data to produce an image with a photographic object positioned at the center of the image frame.

"An image display in real time" means to display images of a photographic object based on image data obtained by an image pickup apparatus successively one after another on a display means; in real-time image display, plural sets of image data are transmitted at intervals of a fraction of one second to several seconds to a display means provided in the image pickup apparatus or the display means of the trigger device by using a digital transmitting means known to public, and said display means practices display of visible images based on those sets of image data.

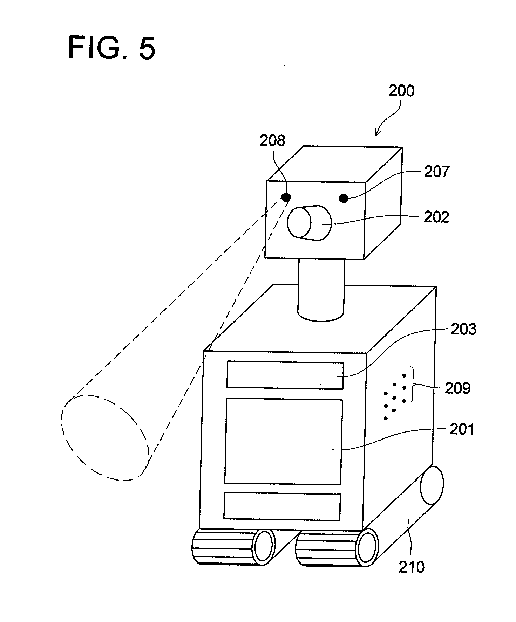

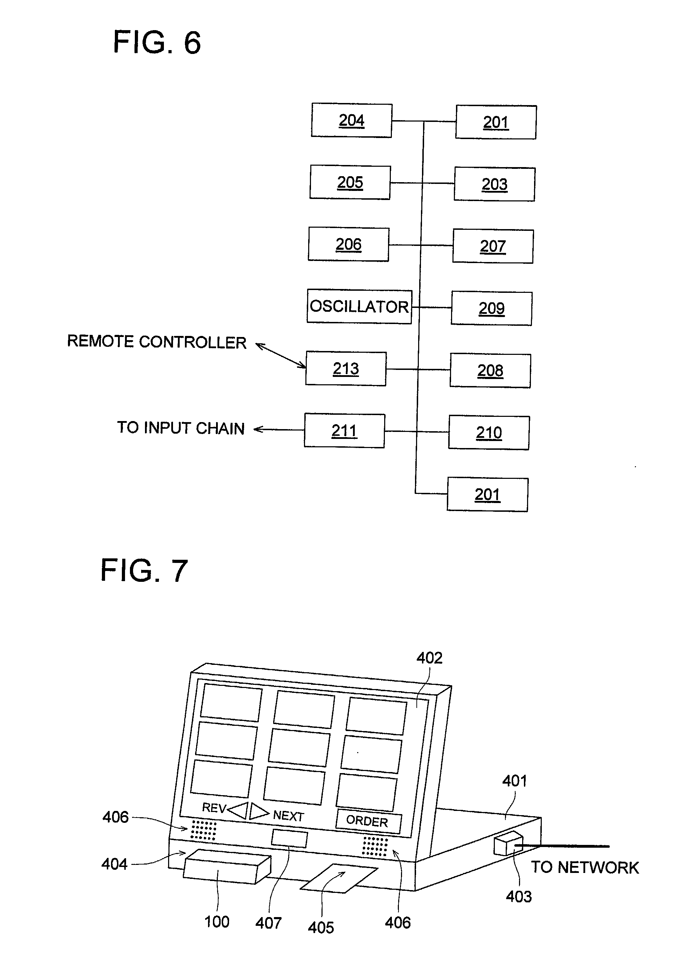

Next, an example of the image pickup apparatus of the structures (20) to (33) will be explained on the basis of Fig. 5 and Fig. 6.

In the image pickup apparatus shown in Fig. 5 and Fig. 6, the following are used: namely, an image pickup unit is used for the above-mentioned image pickup means, a control unit is used for the above-mentioned data combining means, indication of intention of photographing detecting means, image data transmission permitting means, identification ID specifying means, and image data for display generating means, an I/F is used for the above-mentioned transmitting means, a sensor unit is used for the above-mentioned identification ID detecting means and photographic object detecting means, a sensor unit or a transmitting/receiving unit is used for the above-mentioned image pickup trigger signal detecting means, the transmitting/receiving unit and a speaker are used for the above-mentioned image pickup timing notifying means, the transmitting/receiving unit is used for the above-mentioned image pickup timing information transmitting means, information transmitting means, oscillator means, resonance wave detecting means, and image data for display transmitting means, a drive unit is used for the above-mentioned drive means, and a monitor is used for the above-mentioned display means.

The image pickup apparatus 200 having a form shown in Fig. 5 comprises an image pickup unit 202, a strobe unit 203, a RAM 204, a ROM 205, and a control unit 206, which are provided in a general digital camera.

For the image pickup unit 202, for example, a CCD sensor, a C-MOS sensor, etc. can be used.

In this embodiment, as shown in the drawing, the image pickup apparatus 200 comprises a sensor unit 207, a spot light 208, a speaker 209, a monitor 201, a drive unit 210, an I/F (interface) 211, and a transmitting/receiving unit 213.

In said sensor unit 207, a signal wave sent by the remote control device 100 is detected, and whether or not a person is present in the image pickup range is detected.

The spot light 208 fulfils the function to irradiate a range where objects can be photographed in order that a user may know it beforehand.

The speaker 209 fulfils the function to provide information for a user by a voice etc. at the time of image pickup.

The monitor 201 makes it possible for a user to confirm an image obtained by pickup by displaying the image having been obtained by the pickup, or by displaying an image which is being shot in real time. Further, it is capable of displaying various kinds of information.

The drive unit 210 has a function to move the image pickup apparatus itself by a self-running device (a tracked type in the example shown in the drawing), and to rotate the direction of the camera for image pickup.

The I/F 211 is connected to the input chain 300, and is mainly used in transmitting image data to the mainframe A.

The transmitting/receiving unit 213 is used when information transfer with the remote control device 100 is carried out. For the method of transmitting/receiving, any one of wireless communication methods known to public such as IrDA, Bluetooth, and CDMA (a method in which a sign is given to a signal of each sender, and a composite signal of it with signals of other senders is transmitted to a receiver), etc. can be used.

### (EXPLANATION OF THE PRINT ORDER RECEIVING APPARATUS OF THE STRUCTURES (11) AND (12))

A print order receiving apparatus of this invention is a print order receiving apparatus which receives a print order for image data memorized in correspondence to a trigger device identifying ID in respect of an image data processing means for processing said image data in such a way as to combine it with a trigger device for image pickup having a trigger device identifying ID given beforehand, characterized by comprising
a trigger device identifying ID obtaining means for obtaining said trigger device identifying ID,
an output request transmitting means for transmitting a request for outputting image data corresponding to said trigger device identifying ID to said image data processing means, an image data receiving means for receiving image data transmitted in response to said request for outputting, a display means for displaying images based on said image data, a print order inputting means for inputting a print order corresponding to said image data displayed, a print order information generating means for generating print order information on the basis of said print order, and a print order information transmitting means for transmitting said print order information. Further, it is desirable that said print order receiving apparatus further comprises an image selecting means for selecting an image to be printed out of the aforesaid images displayed.

In this invention, "a request for outputting image data" means to request the control of a sequence of operations for finding out and outputting the image data corresponding to a trigger device identifying ID obtained out of image data, which have been memorized in a memory device in correspondence to trigger device identifying ID's beforehand, to an image data processing means.

In this invention, "a print order" means a request for the processing of image data corresponding to an image selected by a print order receiving apparatus of this invention; for example, it means to request the printout based on the image data including several kinds of information such as the paper size for the printout, the number of prints to be produced for each image, whether an supplementary image is requested or not, the layout of the image and its thumbnail image, selection of a value to be added, and a combination of some of these. Further, on top of a printout, the following are included in the scope of a print order of this invention, namely, output of image data to an information recording medium, and output of image data to an arbitrary information processing apparatus connected through a net system to a public network (for example, a WWW server, an FTP server, or a mail server).

In this invention, "print order information" means information generated on the basis of the above-mentioned print order; it is composed of the information corresponding to image data selected by a print order receiving apparatus of this invention in a predetermined format; for the format, DPOF or XML can be used for example.

In this invention, "selection of an image" means an operation of a user inputting information for selecting an arbitrary image out of the images displayed on a display means; for example, it means to input the file name of a set of image data corresponding to one of the displayed images by using a keyboard, to select an image on the display screen by using a pointing device such as a mouse, or the like. Linked to the above-mentioned information inputting operation, the information for specifying the set of image data corresponding to one of the displayed images is temporarily stored in the print order receiving apparatus.

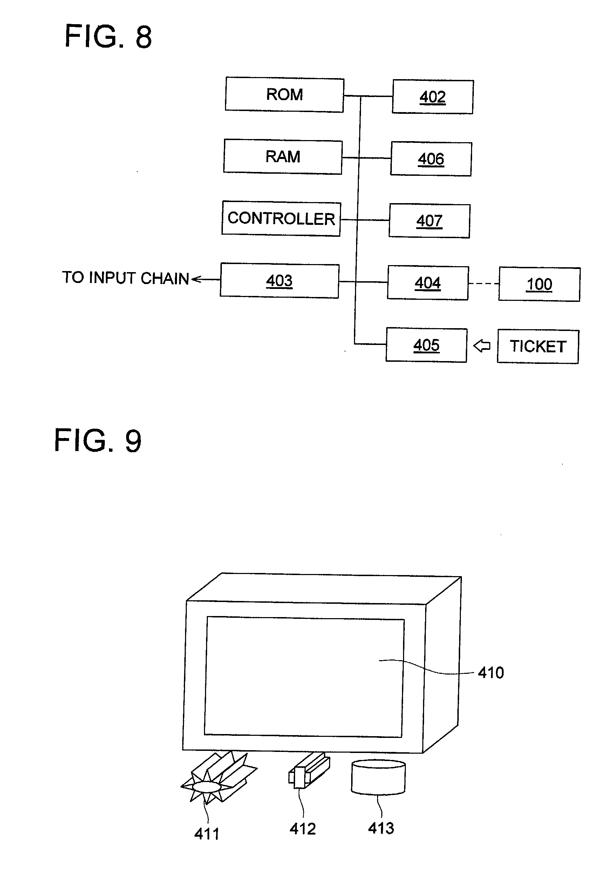

Next, an example of the print order receiving apparatus (A) 400A to be employed as the print order receiving apparatus set forth in the structures (11) and (12) will be explained on the basis of Fig. 7 and Fig. 8.

In the print order receiving apparatus (A) shown in Fig. 7 and Fig. 8, the following are used respectively, namely, a connection connector is used for the above-mentioned request for outputting transmitting means, a network I/F is used for the above-mentioned image data receiving means and order information transmitting means, a touch panel display or a speaker and a microphone are used for the above-mentioned display means, print order inputting means, and image selecting means, and a control unit is used for the above-mentioned order information generating means.

The print order receiving apparatus (A) 400A is composed mainly of an apparatus mainframe 401 and a touch panel display 402.

The touch panel display 402 displays an image and is used in the selection of an image to be printed, the inputting of order information, and the inputting of various kinds of user information.

The network I/F 403 is connected to a public network, and is used mainly in the receiving of image data from the central server, and the transmitting of order information to the central server.

The slot for inserting a remote control device 404 has a shape capable of insertion of the remote control device 100, and on the bottom portion of the opening for insertion, a connector 404 is provided, which makes it possible to read information memorized in the remote control device 100. In this embodiment, information reading is done with an electrical connection, a method using a wireless communication of a specification such as IrDA or Bluetooth, a wire communication with an interface such as USE or IEEE1394 can be used.

In the slot for inserting a ticket 405, an admission ticket which has been given an identification ID beforehand, or the like can be inserted, which makes it possible to read optically the identification printed on the ticket. In this embodiment an optical reading method is employed, but a method of information reading known to public such as reading of a magnetic record, or a method of electrical connection can be used.

The speaker 406 and the microphone 407 can be used as a user interface for the transfer of voice information etc.

### (EXPLANATION OF THE PRINT ORDER RECEIVING APPARATUS OF THE STRUCTURES (13) TO (19))

A print order receiving apparatus of this invention is a print order receiving apparatus which receives a print order for image data memorized in correspondence to a trigger device identifying ID in respect of an image data processing means for processing said image data in such a way as to combine it to a trigger device for image pickup having a trigger device identifying ID given beforehand, characterized by comprising an in-area trigger device identifying ID obtaining means for obtaining an identifying ID of said trigger device existing in a specified area, an output request transmitting means for transmitting a request for outputting image data corresponding to said trigger device identifying ID to said image data processing means, an image data receiving means for receiving image data transmitted in response to said request for outputting, a memory means for image display for memorizing said image data received, a display means for displaying images based on said memorized image data, a print order inputting means for inputting a print order corresponding to said image displayed, a print order information generating means for generating print order information on the basis of said print order, and a print order information transmitting means for transmitting said print order information. Further, it is desirable that 1) the aforesaid in-area trigger device identifying ID obtaining means obtains a plurality of trigger device identifying ID's; 2) the aforesaid output request transmitting means transmits a request for outputting at least one or more sets of image data for each of said plurality of trigger device identifying ID's; 3) the aforesaid memory means for image display memorizes a plurality of sets of image data corresponding to the aforesaid plurality of trigger device identifying ID's, and comprises an image display changing means for changing images to be displayed by the aforesaid display means at every definite time interval by selecting a set of image data for said image to be displayed out of the plural sets of image data memorized by said memory means for image display; 4) the aforesaid order information generating means comprises an image data erasing means for erasing image data in the aforesaid memory means for image display; 5) the aforesaid image data erasing means erases image data relating to the aforesaid print order on the basis of the input of said print order; 6) the aforesaid image data erasing means erases the aforesaid image data which have experienced the passage of a definite time after memorization.

In this invention, "a specified area" means a predetermined range of space including an area surrounding a print order receiving apparatus of this invention, and it is arbitrarily determined on the basis of the range that can be visually recognized on the display means of the print order receiving apparatus, the range to be reached by a signal transmitted by the trigger device for image pickup, etc.

In this invention, "the obtaining of a trigger device identifying ID" means to obtain the trigger device identifying ID of a trigger device for image pickup which has been given beforehand by an electrical, electronic, optical, or physical method; for example, a signal which is characteristic to the above-mentioned trigger device for image pickup transmitted wirelessly by said trigger device for image pickup is received by a print order receiving apparatus of this invention, and the trigger device identifying ID is specified.

Next, a print order receiving apparatus (B) to be employed as the print order receiving apparatus of the structures (13) to (19) will be explained on the basis of Fig. 9.

In the print order receiving apparatus (B) shown in Fig. 9, the following are used respectively: namely, a controller is used for the above-mentioned in-area identification ID obtaining means, order information generating means, image data display changing means, and image data erasing means, an I/F is used for the above-mentioned output request transmitting means, image data receiving means, and order information transmitting means, a monitor is used for the above-mentioned display means, a reception sensor or a transmission antenna is used for the above-mentioned print order inputting means and image selecting means.

The print order receiving apparatus B comprises the monitor 410, the reception sensor 411, the transmission antenna 412, and the controller 413.

The controller 413 detects an identification ID of the remote control device 100, requests the outputting of image data corresponding to the identification ID to the mainframe B, and practices the control of image display on the monitor, erasing of image data, generation and transmission of print order information, etc. The reception sensor 411 detects a low-frequency wave sent out by the remote control device 100, and detects a pulse wave for a print order issued from the remote control device 100, etc. The monitor 410 practices display of image data.

The I/F is connected to the output chain 600 (refer to Fig.2), and is used in the transmission/reception of image data, print order data, etc.

In the following, the operation of the processing system shown in Fig. 1 to Fig. 9 will be explained.

### 1. ACTUATION OF THE REMOTE CONTROL DEVICE

A remote control device 100, which is rented out, for example, by stores in a theme park, or automatic vending machines, is obtained together with a purchased IC card.

In the IC card, data for identifying a remote controller are written, and by mounting said IC card in the remote control device 100, a sending unit built in the remote control device 100 starts sending out a wave of a specified frequency, which makes it possible for the image pickup apparatus 200 to pursue it.

### 2. IDENTIFICATION AND PURSUIT OF A REMOTE CONTROL DEVICE BY AN IMAGE PICKUP APPARATUS

The oscillator in the image pickup apparatus 200 generates an oscillation of a constant frequency (35 Hz for example). The oscillator in the remote control device generates an oscillation of a frequency for identification (35.5 Hz for example) in resonance with the oscillation of the image pickup apparatus 200.

A beat oscillation is generated by the oscillation wave from the remote control device 100 and the oscillation wave from the image pickup apparatus 200. By specifying the period of this beat oscillation, the frequency of the oscillation wave from the remote control device 100 can be specified, which makes it possible to identify the remote control device 100 individually.

Further, by the measurement of Doppler effect, it is judged whether the remote control device is coming nearer or going farther, which makes it possible to pursue a target coming nearer.

By using a low frequency for the frequency of the oscillation wave of the image pickup apparatus 200 and utilizing the low-frequency beat with that of the remote control device, the respective frequencies of a considerable number of remote control devices 100 can be easily specified; and moreover, it has a high transmittance and a high S/N ratio.

Further, instead of a low-frequency wave,

electromagnetic waves of various frequencies, light rays, etc. can be used, and for the identification and pursuit of an individual device by using any one of these, any method known to public can be used.

### 3. EXAMPLE OF IMAGE PICKUP 1

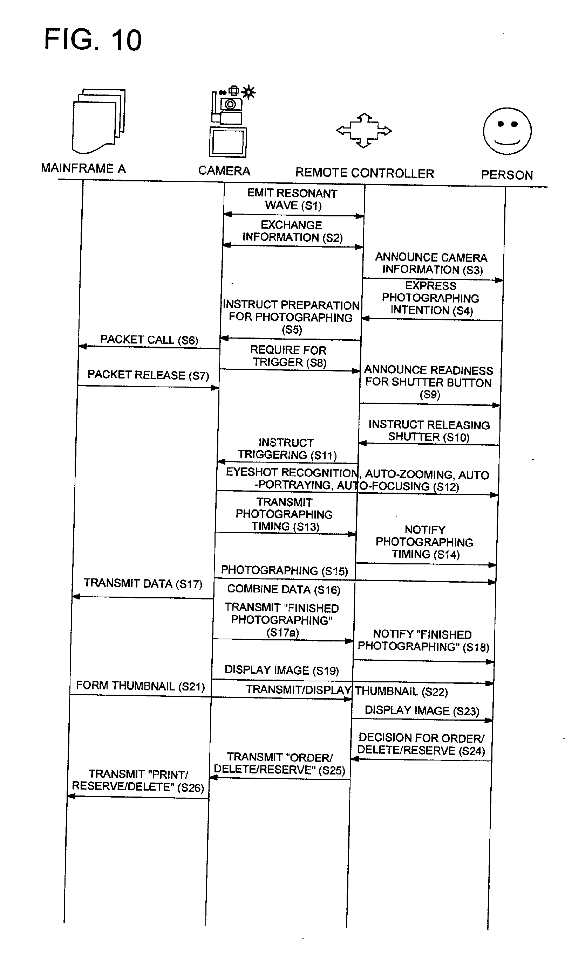

Next, an example of image pickup 1 will be explained mainly on the basis of Fig. 10.

The sensor 207 of the image pickup apparatus 200 detects the remote controller identifying ID from the oscillation wave sent out from the remote control device 100 (S1).

The Doppler effect of the detected oscillation wave is detected, and if said remote control device 100 is coming nearer, the detection of the oscillation wave is continued.

When it is detected that the remote control device 100 has come within the image pickup range of the image pickup apparatus 200, the ID of the remote control device 100 is detected from the frequency of the oscillation wave; then, said remote control device 100 is notified of it through the public network 700 that image pickup is possible, and also the location information of the image pickup apparatus 200, the kind of the image pickup apparatus 200 (example: adaptability for a moving image, a still-standing image, a composite image, a wide angle of view, a portrait, etc.), and the present state of the image pickup apparatus 200 (being able or unable to practice image pickup, the estimated waiting time until it becomes able to practice image pickup, the number of persons waiting for the use of the image pickup apparatus, etc.) are transmitted to the remote control device 100 directly wirelessly or through the input chain 300, the mainframe A, B, the net system 700, and the mobile communication network 701 (S2).

On the monitor 101 of the remote control device 100 which has received the "image pickup enabled" notification, a message to that effect is displayed, and when it receives the location information of the image pickup apparatus 200, the location information indicating to which direction the image pickup apparatus 200 with respect to said remote control device 100 is located, etc. is displayed on the monitor 101 (S3).

When a user carries out an indication of intention of photographing to the remote control device 100 (for example, giving out a voice such as "stand by", or "be ready", half-pressing of the image pickup button, or the like) (S4), the indication of intention of photographing is transmitted from the remote control device 100 to the image pickup apparatus 200 (S5).

Having received the indication of intention of photographing, the image pickup apparatus 200 carries out the preparation for image pickup such as the preparation of strobe emission, auto-focusing for the user having the remote control device 100, auto-zooming, and exposure adjustment, while it carries out a packet call (request for data reception) through the input chain 300 to the mainframe A (S6).

Having received the packet call, the mainframe A is brought in the state to be able to receive the data transmission from the image pickup apparatus 200 (S7).

Further, at this time, the image pickup apparatus 200 practices the request for triggering to the remote control device 100 (S8), and the remote control device 100, having received this request, carries out the request for triggering to the user by using some of the various kinds of user interfaces such as a speaker (S9).

When the user practices the instruction of image pickup (for example, giving out a voice such as "shooting" or "image pickup" to the microphone, full-pressing of the image pickup button, or the like) (S10), a trigger instruction is transmitted from the remote control device 100 to the image pickup apparatus 200 (S11).

The trigger instruction from the remote control device 100 to the image pickup apparatus 200 is carried out by means of a direct wireless communication, communication through the mobile communication network or the input chain, or the modulation of a resonance wave (example: transmission of a pulse wave having a different frequency, momentary interception of a resonance wave oscillation, or the like).

The image pickup apparatus 200, having received the trigger instruction, practices eye recognition, auto-zooming, auto-focusing, auto-portraying, etc. (S12). As regards the above-mentioned operations, it is the best mode, a mode in which an approximate operation is done at the stage of "image pickup preparation", and at the timing when the image pickup trigger is issued, the condition is settled correctly. It is because a user fixes the pose at the moment when the image pickup trigger is issued.

The image pickup apparatus 200 carries out the notification of image pickup timing (countdown until the image pickup, etc.) to the user, to urge him to get ready for image pickup (S13).

In another way, the remote control device, having received the image pickup timing from the image pickup apparatus 200, notifies the various kinds of user interfaces such as a speaker of the image pickup timing information (S14).

The image pickup apparatus, having received the image pickup instruction, practices the combining of image data to the associated data (S16), after it has carried out the image pickup of the user (S15). The data to be combined with the image data includes at least the remote controller identifying ID and the image pickup time, and as occasion demands, a camera identifying ID, image pickup conditions (the elevation angle of the camera, the angle of rotation, the object distance), etc. are added to them. As regards the form of combining, it is possible to add the associated data to the head portion of the image data, or to add the above-mentioned information to the file name of the image data.

The image pickup apparatus 200 transmits the image data for which combining has been finished to the mainframe A (S17).

The image pickup apparatus 200 transmits a message to the effect that the image pickup is over to the remote control device 100 (S17a), and the remote control device, having received the message to that effect, notifies the user of the information to the effect that the image pickup is over using some of various kinds of user interfaces such as a speaker (S18).

Further, the image pickup apparatus 200 is also able to present the image obtained by pickup to the user by using a display means for confirmation (S19).

The mainframe A, having received the image data, transfers the image data to the filing system 720 (S20), while it generates image data for display (a low-resolution, high-compression image file) (S21), and transmits the image data for display through the mainframe B, the output chain 600, and the mobile communication network 701 to the remote control device 100 (S22).

The remote control device 100, having received the image data for display, displays the image data for display on the monitor 101, and after the passage of a predetermined time, the display is erased (S23).

The user, having recognized the image obtained by pickup on the monitor 101, makes a judgement to order a print (affirmation), a judgement to delete it from the mainframe (denial), or a judgement to keep it in the mainframe for making a print order at a later time(reservation) (S24), and using the remote control device 100, he transmits the result of judgement to that effect to the image pickup apparatus 200 (S25); the image pickup apparatus 200, having received this transmission, transmits the information to the mainframe A (S26). If no instruction is given, the image data are dealt with as reservation.

### 4. EXAMPLE OF IMAGE PICKUP 2

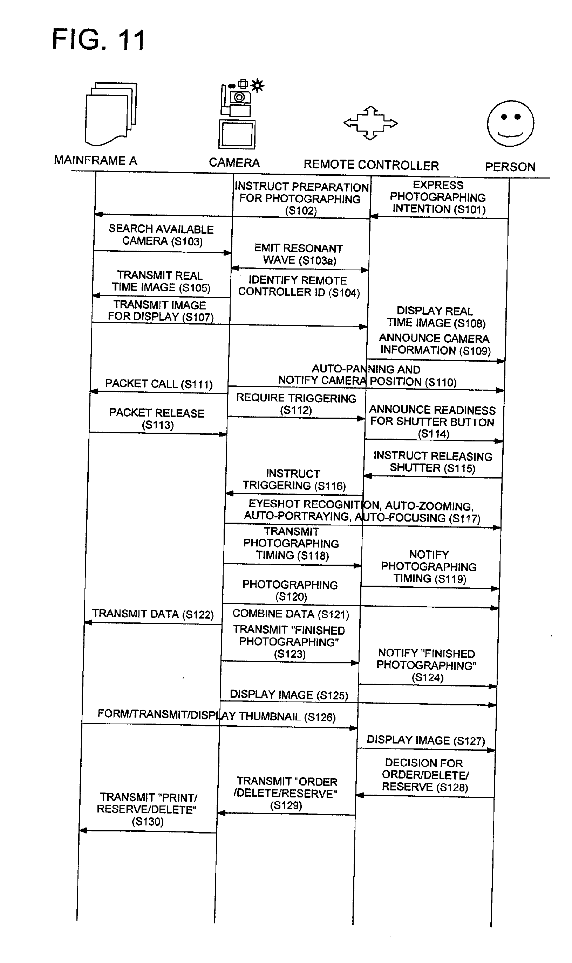

Next, the example of image pickup 2 will be explained on the basis of Fig. 11.

When a user carries out an indication of intention of photographing to the remote control device 100 (for example, giving out a voice such as "stand by", or "be ready", half-pressing of the image pickup button, or the like) (S101), the indication of intention of photographing is transmitted from the remote control device 100 through the mobile communication network 701 to the mainframe A (S102).

The mainframe A transmits a request for searching an image pickup apparatus 200 which is now able to do image pickup together with the identification ID of said remote control device 100 (oscillation frequency) to every image pickup apparatus 200 (S103).

Every image pickup apparatus 200, having received the request for searching, carries out the reception of an oscillation wave by means of the image sensor 207 (S103a), and identifies the remote control device 100 from its frequency (S104).

The image pickup apparatus 200, which has detected a frequency agreeing with the frequency in the request for searching, transmits the notification of its being capable of image pickup to the mainframe A, while it transmits a real-time image sensed by the image sensor to the mainframe A (S105).

Further, it prepares for image pickup as it secures the image pickup position where it can photograph the user in good pickup conditions. Moreover, it carries out the operation of notifying the location of the image pickup apparatus such as lighting a lamp to the user in order to notify the user of the location of the image pickup apparatus (S110).

The image pickup apparatus 200 carries out a packet call for requesting the opening of a packet to the mainframe A (S111), while it carries out a request of triggering to the remote control device 100 (S112).

The mainframe A, having received the notification that the image pickup apparatus is now capable of image pickup, opens a packet for the image pickup apparatus 200 (S113). In the case where it receives the notification from a plurality of image pickup apparatus, opens the accesses for all of them.

The remote control device 100, which has received the request of triggering in S112, using some of various kinds of user interfaces such as a speaker, carries out the request for the input of an image pickup trigger to the user (S114).

The mainframe A, having received a real-time image, generates image data for display (S106), and transmits the image data for display together with the information that "a camera capable of image pickup is available", through the mobile communication network 701 to the remote control device 100 (S107).

On the monitor 101 of the remote control device 100, which has received the information that "a camera capable of image pickup is available", a display to that effect is made (S109), and also the image for display transmitted from the mainframe A is displayed in real time (S108).

When the user carries out the instruction of image pickup to the remote control device 100 (for example, giving out a voice such as "shooting" or "image pickup" to the microphone, full-pressing of the image pickup button, or the like) (S115), an image pickup instruction is transmitted from the remote control device 100 to the image pickup apparatus 200 (S116).

The image pickup apparatus 200 carries out auto-zooming, auto-focusing, etc. for the photographic object (S117), to prepare for image pickup.

Having done the preparation for image pickup in S117, the image pickup apparatus 200 transmits image pickup timing information to the remote control device 100 (118), and the remote control device 100, which has received this image pickup timing information, using some of various kinds of user interfaces such as a speaker, carries out the notification of image pickup timing to the user (S119).

Having received the image pickup instruction, the image pickup apparatus 200 carries out the image pickup for the user (S120), combines the image data obtained by the image pickup with the various kinds of ID's (S121), and transfers the data through the input chain 300 to the mainframe A (S122), while it transmits a message to the effect that image pickup is over to the remote control device 100 (S123).

The remote control device 100, having received this transmission, using some of various kinds of user interfaces such as a speaker, notifies the user of the information to the effect that image pickup is over (S124).

Further, the image pickup apparatus 200 displays the image obtained by pickup on the display means such as the monitor 207 (S125).

Further, it is possible that the mainframe A produces thumbnail image data, which are image data for display, and transmits the data to the remote control device 100 (S126), and this thumbnail image is displayed at the side of the remote control device 100.

Because the subsequent steps of the procedure are the same as those in the example of image pickup 1 (S128, S129, and S125 are equivalent to S124, S125, and S126 in the example 1 respectively), the explanation will be omitted.

### 5. EXAMPLE OF A PRINT ORDER 1 BY THE PRINT ORDER RECEIVING APPARATUS A

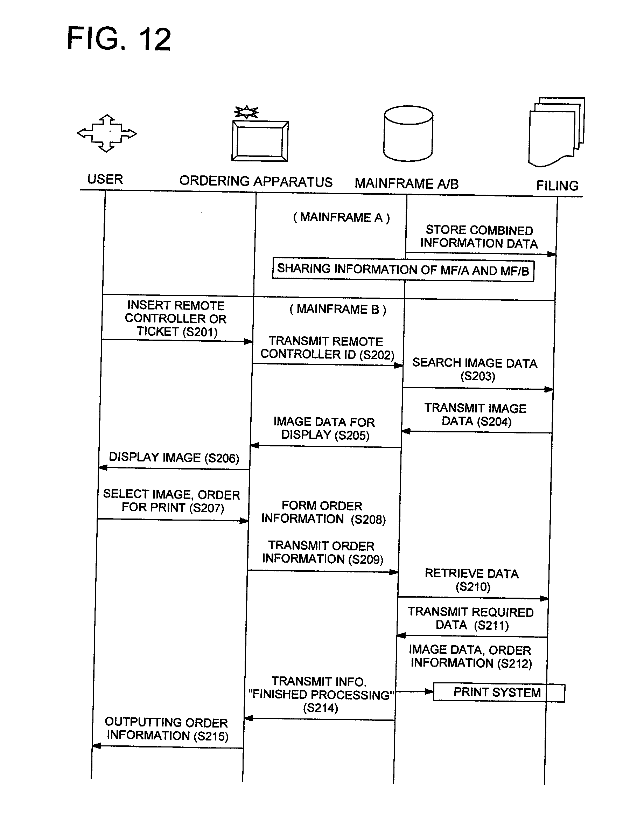

Next, the example of print order 1 by the print order receiving apparatus A will be explained mainly on the basis of Fig. 12.

A user mounts the remote control device 100 to the print order receiving apparatus 400A, or places the device close to the receiving apparatus (S201).

The print order receiving apparatus 400A reads the trigger device identifying ID, and transmits the trigger device identifying ID to the mainframe B (S202).

The mainframe B extracts image data corresponding to the transmitted trigger device identifying ID out of the image data stored in the filing system 720 (S203 and S204).

The mainframe B converts the data into image data for display, to transmit them to the print order receiving apparatus 400A (S205).

The print order receiving apparatus 400A displays the images of the image data for display received (S206).

The user selects an image which he wishes to print and makes an order for it (S207).

After the content of the order and the sum of money payable are confirmed by the user, the order is issued. The order information is generated by the print order receiving apparatus 400A (S208), and is transmitted to the mainframe B together with the identification ID of the print order receiving apparatus 400A (S209).

The mainframe B reads out the image data for printing from the filing system 720 on the basis of the order information (S210 and S211), and transfers the image data through the output chain 600 to the print system 800 together with the order information (S212 and S213).

Further, after transmitting the specified information to the print system, the mainframe B transmits the information to the effect that the processing is over to the print order receiving apparatus (s214), and the print order receiving apparatus, having received this transmission, can output the information concerning the order information (S215).

For the selection of image, a course in which selection can be done arbitrarily and several predetermined courses (best 10, best 20, etc.) are prepared for use; if one of the predetermined course is selected, the set number of images, which have been combined with the image pickup apparatus identifying ID and arranged in the order of priority beforehand, are automatically selected. Further, also it is appropriate to prepare in the menu "print all at a time" for selecting all the images.

Also it is possible to make a print order from a PC (a personal computer), a cellular phone, or the like through the net system (Internet) 700 and the mobile communication network 701.

In that case, by transmitting the remote controller identifying ID from the PC or the cellular phone to the mainframe B, the user can make image perusal and a print order through the net system.

### 6. EXAMPLE OF A PRINT ORDER 2 BY THE PRINT ORDER RECEIVING APPARATUS B

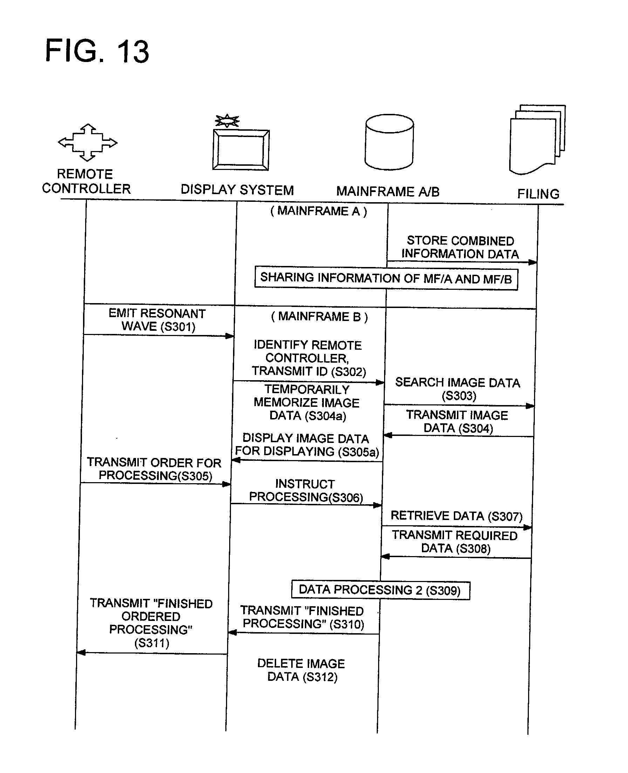

Next, the example of a print order 2 by the print order receiving apparatus B will be explained on the basis of Fig. 13.

A remote control device 100 existing within the range of visual recognition in the monitor for the print order receiving apparatus is detected by a sensor (S301).

The print order receiving apparatus 400B specifies the identification ID of the remote control device 100 and transmits it to the mainframe B (S302), which reads out the image data corresponding to the identification ID from the filing system (S303 and S304), and the image data are temporarily memorized in the controller 413 of the print order receiving apparatus 400B (S304a).

In the case where a plurality of remote control devices exist within the range of visual recognition in the monitor for display of the print order receiving apparatus 400B, it is appropriate that the print order receiving apparatus B specifies the respective identification ID's of all the remote control devices, and the mainframe B extracts at least one set of image data for each of the identification ID's, from the filing system.

The print order receiving apparatus 400B displays images based on the image data for display, which have been temporarily memorized, at random or in the normal order (S305a). A user has been watching the images displayed on the monitor, and if he finds an image he wishes to print or to output to a DVD-ROM or the like, he practices an order operation using a remote control device during the display of said image on the monitor (for example, pressing the trigger switch, by which the remote control device sends out a pulse wave to be detected by a sensor); the print order receiving apparatus, having received the order, transmits the identification information of said image as being displayed, the message to the effect that an order has been made for it, and the content of the order (for example, printing, outputting to a DVD-ROM, online transfer, or the like) to the mainframe B (S306), and the mainframe B reads out the image data corresponding to said image for which the order has been made from the filing system (S307 and S308), to practice the specified data processing (S309).

After practicing the data processing in S309, the mainframe B transmits a message to the effect that processing is over to the display system (S310), and the display system, having received this transmission, can transmit a message to the effect that order reception is over to the remote control device (S311).

The image data for display corresponding to the image for which the order has been made are erased from the controller of the print order receiving apparatus (S312).

The set of image data whose image has been displayed a certain number of times (for a certain period of time) are erased from the controller 413 (S312).

In exchange for the erased set of image data, another set of image data is read out from the mainframe B.

By installing the above-mentioned apparatus 400B for people who are standing in line waiting for an attraction, a user can make a print order during the waiting time, which makes it possible to ease the situation that many users come with a rush to the terminal for receiving a print order, to stand in line waiting for the use of the terminal.

### 7. TIMING OF PRACTICING PRINTING

Printing may be practiced at any one of the following timings. For example, it can be done (1) at the timing when a print order is made at a terminal for receiving a print order, (2) at the timing when a prepaid IC card inserted into a remote control device 100 has been used up to the specified number of times, (3) at the timing when refund has been done for the remaining number of times of use of a prepaid IC card inserted into a remote control device 100, etc.

In the case where a user has used a plurality of IC cards, because their identification ID are different, each of the used IC cards is dealt with as one of different orders, but also it is possible to make a processing for unifying the identification ID's by accessing from a terminal of a store etc. to the mainframe B. After that, image display and a print order can be done by the input of the unified identification ID.

### 8. MAKING A PRINT

Next, as regards print making, a print is outputted from a printer which has been installed at the place designated at the time of making the print order.

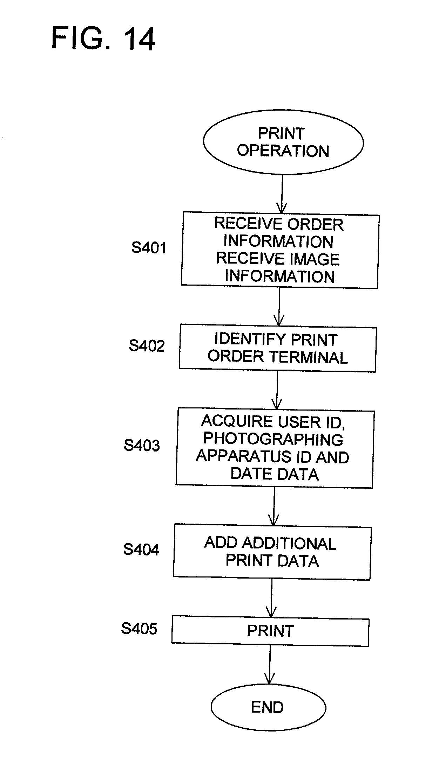

A printing operation in the print system 800 will be explained by using Fig. 14.

Image information which has been transmitted from the mainframe B through the output chain together with the order information is received (S401).

By the extraction of the identification ID of the print order receiving apparatus included in the received order information, the terminal by which the print order was made is specified (S402), and the identification ID of the image pickup apparatus combined with the image data, the user identifying ID, and the image pickup time information are extracted (S403).

The supplementary print data corresponding to the identification ID of the print order receiving apparatus, the identification ID of the image pickup apparatus, the user identifying ID are added to the image data (S404), and printing is carried out on the basis of the image data to which the supplementary print data are added.

For the supplementary print data, for example, in the case where a print order is made from a terminal installed in the theme park, or from a terminal installed in the specified area in the theme park, a picture of a character or a logo-mark of the theme park is added; if the image pickup apparatus is installed in the specified attraction site, the logo-mark of the attraction is added; further, the name of the user, the records of the contest of the user if the image pickup is done in the attraction of a contest-type, the date and time of the image pickup, etc. are added.

The user receives the print in exchange for the remote control device and the charge at the place of print delivery which he designated at the time of making the print order.

Further, in an image processing system of this invention, also it is possible that by means of a recording means for an information recording medium (not shown in the drawing) connected to the output chain, the image data selected by the print order receiving apparatus are outputted to an information recording medium instead of the formation of a print by a printing means, to be provided for a user. In this case, for the information recording medium, any one of a magnetic recording medium, an optical recording medium, an electrostatic recording medium, etc. can be used, and for the recording of image data on an information recording medium, it is possible to use a recording format known to public. Further, at the time of making a print order by a print order receiving apparatus, a procedure step to select an information recording medium to which the image data are to be outputted is added.

Further, in the same way as the above-mentioned output to an information recording medium, also it is possible to output the image data selected by a print order receiving apparatus through a net system to an arbitrary information processing apparatus connected to a public network (for example, a WWW server, an FTP server, or a mail server). In this case, at the time of making a print order by a print order receiving apparatus, a procedure step to select an information processing apparatus to which the image data are to be outputted (for example, inputting an electronic mail address, inputting the Internet address of the WWW server, or the FTP server, or the like) is added.

By this invention, it is possible to provide an image processing system, which makes possible image pickup and acquisition of a print which are satisfactory for users in a theme park or the like, and is economical for both of the users and the provider of the system, by using two network systems when inputted image data in an image pickup system are transmitted to a print outputting system, and employing a control system for obtaining and storing image data which are satisfactory for a user in one network system and a control system for carrying out the selection of a set of image data and making a print requested by the user in the other network system.

## Claims

1. An image processing system, comprising:
an image pickup trigger device transmitting a image pickup trigger signal;
an image pickup device for obtaining image data by imaging a photographic object in response to the trigger signal;
a first network for transmitting said image data;
a selection device for selecting a set of image data to be processed from the image data;
a processing information generating section for generating processing information of the set of image data selected;
a second network for transmitting the processing information; and
an image data processing section connected to both the first network and the second network for processing the image data.

2. The image processing system of claim 1, wherein the image data processing section comprising:
a first processor connected to the first network;
a second processor connected to the second network; and
a memory device connected to both the first processor and the second processor for memorizing the image data.

3. The image processing system of claim 2, wherein at least one of the second network and the second processor is connected to a public network.

4. The image processing system of claim 1 further comprises a printer connected to the image data processing section, wherein the processing information includes a condition for the printing of a set of selected image data, and the image data processing section transmits the set of selected image data and the processing information to the printer.

5. The image processing system of claim 1, wherein the image pickup trigger device comprises trigger device display means, and the image data processing section generates image data for display on the basis of the image data and transmits the image data for display to the trigger device display means through the first network.

6. The image processing system of claim 1, further comprises a display means for confirmation provided in correspondence to the image pickup device, and the image data processing section generates image data for display on the basis of the image data, and transmits the image data for display to the display means for confirmation through the first network.

7. The image processing system of claim 1, further comprises a display means for selection provided in correspondence to the selection device, and the image data processing section generates image data for display on the basis of the image data, and transmits the image data for display to the display means for selection through the second network.

8. The image processing system of claim 1, wherein the image pickup device comprises a trigger device identifying ID detector for detecting a trigger device identifying ID, which has been given to the trigger device, and a data combining means for combining the image data with the trigger device identifying ID, and the image data combined with the trigger device identifying ID are transmitted to the first network.

9. The image processing system of claim 8, wherein the image pickup device has an image pickup device identifying ID, and the data combining means combines the image data with the image pickup device identifying ID.

10. The image processing system of claim 8, wherein the image pickup device comprises image pickup time information obtaining means for obtaining an image pickup time information including a time when image pickup of the photographic object is conducted, and the data combining means combines the image data with the image pickup time information.

11. A print order receiving apparatus for being used together with an image processing system, wherein the image processing system comprises: an image pickup trigger device having a trigger device identifying ID and transmitting a image pickup trigger signal; an image pickup device for obtaining image data by imaging a photographic object in response to the trigger signal; a memory device for memorizing the image data; and an image data processing section for processing the image data; wherein the print order receiving apparatus receives a print order, to the image data processing section, for image data memorized in correspondence to the trigger device identifying ID, in such a way that the image data are combined with the image pickup trigger device, the print order receiving apparatus comprising:
a trigger device identifying ID obtaining means for obtaining the trigger device identifying ID;
an output request transmitter for transmitting a request for outputting image data, corresponding to the trigger device identifying ID, to the image data processing section;
an image data receiving means for receiving the image data transmitted from the image data processing section in response to the request for outputting;
a display means for displaying images based on the image data;
a print order inputting device for inputting a print order corresponding to the image data displayed;
a print order information generating device for generating print order information on the basis of the print order; and
a print order information transmitter for transmitting said print order information.

12. The print order receiving apparatus of claim 11, further comprises an image selecting device for selecting an image to be printed out of displayed images.

13. A print order receiving apparatus for being used together with an image processing system, wherein the image processing system comprises: an image pickup trigger device having a trigger device identifying ID and transmitting a image pickup trigger signal; an image pickup device for obtaining image data by imaging a photographic object in response to the trigger signal; a memory device for memorizing the image data; and an image data processing section for processing the image data; wherein the print order receiving apparatus receives a print order, to the image data processing section, for image data memorized in correspondence to the trigger device identifying ID, in such a way that the image data are combined with the image pickup trigger device, the print order receiving apparatus comprising:
an in-area trigger device identifying ID obtaining device for obtaining the identification ID of the image pickup trigger device existing in a specified area;
an output request transmitter for transmitting a request for outputting image data, corresponding to the trigger device identifying ID, to the image data processing section;
an image data receiving device for receiving image data transmitted from the image data processing section in response to the request for outputting;
a memory device for image display for memorizing the image data received;
a display device for displaying an image based on the image data;
a print order inputting device for inputting a print order corresponding to the image displayed;
a print order information generating device for generating print order information on the basis of the print order; and
a print order information transmitter for transmitting the print order information.

14. The print order receiving apparatus of claim 13, wherein the in-area trigger device identifying ID obtaining device obtains a plurality of trigger device identifying ID's.

15. The print order receiving apparatus of claim 13, wherein the output request transmitter transmits a request for outputting at least one set of image data for each of the plurality of trigger device identifying ID's.

16. The print order receiving apparatus of claim 13, wherein the memory device for image display memorizes a plurality of sets of image data corresponding to the plurality of trigger device identifying ID's, and the memory device for image display comprises an image display changing device for changing images to be displayed by the display device at every prescribed time interval by selecting a set of image data for the image to be displayed out of the plural sets of image data memorized by the memory device for image display.

17. The print order receiving apparatus of claim 13, wherein the order information generating device comprises an image data erasing means for erasing image data in the memory device for image display.

18. The print order receiving apparatus of claim 17, wherein the image data erasing means erases image data relating to the print order on the basis of the input of said print order.

19. The print order receiving apparatus of claim 17, wherein the image data erasing means erases the image data that have experienced the passage of a prescribed time after memorization.

20. An image pickup apparatus for obtaining image data by imaging a photographic object on the basis of an image pickup trigger signal transmitted from a image pickup trigger device, comprising:
a trigger device identifying ID detecting device for detecting a trigger device identifying ID of the image pickup trigger device;
an image pickup device for obtaining image data by imaging a photographic object;
a data combining means for combining the image data with the trigger device identifying ID;
a transmitter for transmitting image data and trigger device identifying ID combined by the data combining means;
a photographic object detecting device for detecting that the image pickup trigger device held by the photographic object exists within a range where image pickup can be conducted;
an intention of photographing indicating signal detecting device for detecting a signal indicating an intention of photographing transmitted from the image pickup trigger device which exists within the range where image pickup can be conducted; and
an image data transmission permitting means for permitting the transmission of image data by the transmitter in response to the intention of photographing indicating signal.

21. The image pickup apparatus of claim 20, further comprising a image pickup trigger signal detecting device for detecting a image pickup trigger signal transmitted from the image pickup trigger device, and conducts image pickup on the basis of the image pickup trigger signal detected by the image pickup trigger signal detecting device.

22. The image pickup apparatus of claim 20, further comprising an image pickup timing information transmitter for transmitting image pickup timing information to the image pickup trigger device in response to the image pickup trigger signal.

23. The image pickup apparatus of claim 20, further comprising an image pickup timing notifying device for notifying an image pickup timing in response to the image pickup trigger signal.

24. The image pickup apparatus of claim 20, further comprising an image pickup apparatus information transmitter for transmitting image pickup apparatus information to the image pickup trigger device.

25. The image pickup apparatus of claim 24, wherein as regards the image pickup apparatus information, at least one selected out of the location information of the image pickup apparatus, the kind of the image pickup apparatus, the state of the image pickup apparatus, and the waiting time until the image pickup apparatus conducts imaging is transmitted.

26. The image pickup apparatus of claim 24, further comprising an oscillator for generating an oscillation wave of a constant frequency, a resonance wave detector for detecting a resonance wave with respect to the oscillation wave, and a trigger device identifying ID specifying means for specifying the trigger device identifying ID on the basis of the resonance wave.

27. The image pickup apparatus of claim26, wherein the trigger device identifying ID is specified on the basis of the period of the beat oscillation wave generated between the oscillation wave generated by the oscillator and the resonance wave.

28. The image pickup apparatus of claim20, further comprising a display image data generating device for generating display image data based on the image data, and a display image data transmitter for transmitting the display image data to the image pickup trigger device.

29. The image pickup apparatus of claim 20, further comprising a driving device for driving the image pickup device in such a way that a photographic object holding the image pickup trigger device comes within a range where image pickup can be conducted.

30. The image pickup apparatus of claim 29, the driving device makes at least one kind of driving action selected out of zooming, focusing, and panning for the photographic object.

31. The image pickup apparatus of claim 20, further comprising a confirmation display device for displaying an image for confirmation based on image data obtained by the image pickup device.

32. The image pickup apparatus of claim 31, wherein the confirmation display device conducts an image display based on the image data in real time.

33. The image pickup apparatus of claim 31, wherein the confirmation display device conducts an image display based on image data obtained through image pickup on the basis of the image pickup trigger signal.

34. An image pickup trigger device, comprising:
a trigger device identifying ID sending device for sending out a trigger device identifying ID, which is given to the trigger device, to an image pickup device;
a receiving device for receiving image pickup device information which is sent back by the image pickup device in response to the sending out of said trigger device identifying ID;
a notifying device for carrying out the notification of information based on the image pickup device information received;
an inputting device for inputting an image pickup instruction to instruct the practice of image pickup by the image pickup device, and
an image pickup trigger signal transmitter for transmitting a image pickup trigger signal to the image pickup device in response to the image pickup instruction.

35. The image pickup trigger device of claim 34, further comprising an inputting device for inputting an indication of photographing intention before the input of the image pickup instruction, and an indication of photographing intention transmitter for transmitting the indication of photographing intention to the image pickup device.
